# EUROPEAN PATENT APPLICATION

(11) **EP 4 683 356 A1**
(43) Date of publication of application: **21.01.2026**
(21) Application number: 24784094.5
(22) Date of filing: 25.03.2024
(51) Int. Cl.: H04W 4/50, H04W 24/08

(54) **COMMUNICATION METHOD AND COMMUNICATION APPARATUS**

(30) Priority: 07.04.2023 CN 202310394553
(71) Applicant: Huawei Technologies Co., Ltd., Shenzhen, Guangdong 518129 (CN)
(72) Inventor: SUN, Haiyang, Shenzhen, Guangdong 518129 (CN); MARQUEZAN, Clarissa, Shenzhen, Guangdong 518129 (CN)
(74) Representative: Epping - Hermann - Fischer
(86) International application number: PCT/CN2024/083541
(87) International publication number: WO 2024/208009

(57) **Abstract**

This application provides a communication method and a communication apparatus. According to the method provided in this application, after receiving first information from a second network element, an analytics service consumer can determine, based on the first information, whether at least one first data analytics network element supports a first capability, and then a first network element can determine, based on a capability of the at least one first data analytics network element, whether to subscribe to an analytics service from at least one second data analytics network element. This avoids adverse impact caused by subscribing to the analytics service by the first network element from a first data analytics network element that does not support the first capability. The first capability includes one or more of the following: an accuracy checking capability, an analytics aggregation capability, or an analytics metadata provisioning capability.

## Description

This application claims priority to Chinese Patent Application No. 202310394553.9, filed with the China National Intellectual Property Administration on April 7, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Due to factors such as the mobility of user equipment (user equipment, UE), changes in a location of a network data analytics function (network data analysis function, NWDAF) service consumer (service consumer) (also referred to as an analytics consumer (analytics consumer)), and the need for load balancing between a plurality of NWDAFs, in a multi-NWDAF deployment scenario, a source NWDAF (an NWDAF being used) and a target NWDAF (a new NWDAF to be used) may use a process of transferring analytics context (analytics context) and analytics subscription (analytics subscription), to allow the target NWDAF to generate an analytics result required by the analytics consumer.

Before the source NWDAF starts analytics subscription transfer to the target NWDAF, the analytics consumer or the source NWDAF may discover and select the target NWDAF, but the target NWDAF selected by the analytics consumer or the source NWDAF may be incapable of providing services subscribed to by the analytics consumer.

### SUMMARY

This application provides a communication method and a communication apparatus, to avoid adverse impact caused by the inability of an analytics consumer to select an NWDAF that supports a first capability.

According to a first aspect, a communication method is provided. The method may be performed by a first network element, or may be performed by a component (for example, a chip or a circuit) of a first network element. This is not limited. Descriptions are provided below by using an example in which the method is performed by the first network element.

The method includes: The first network element receives first information from a second network element, where the first information is used to determine whether at least one first data analytics network element supports a first capability, and the first capability includes one or more of the following: an accuracy checking capability, an analytics aggregation capability, or an analytics metadata provisioning capability; and the first network element determines, based on the first information, whether to subscribe to an analytics service from at least one second data analytics network element, where the second data analytics network element is the same as or different from the first data analytics network element.

For example, the first network element may be referred to as an analytics consumer (analytics consumer) or a network data analytics function (network data analysis function, NWDAF) service consumer.

According to the foregoing technical solution, after receiving the first information from the second network element, the first network element can determine, based on the first information, whether the at least one first data analytics network element supports the first capability, so that the first network element can determine, based on a capability of the at least one first data analytics network element, whether to subscribe to the analytics service from the at least one second data analytics network element. This avoids adverse impact caused by subscribing to the analytics service by the first network element from the first data analytics network element that does not support the first capability. For example, if the first network element subscribes to the analytics service from the first data analytics network element that does not support the first capability, an analytics result that is received by the first network element and that is from the first data analytics network element that does not support the first capability may not be an analytics result required by the first network element. In this case, adverse impact may be caused by executing the first decision by the first network element based on the analytics result.

Optionally, when the first information is used to determine that one or more first data analytics network elements in the at least one first data analytics network element support the first capability, the first information is further used to determine a level corresponding to the first capability supported by the one or more first data analytics network elements.

With reference to the first aspect, in some implementations of the first aspect, the second network element is a network repository function network element, capability information of the at least one first data analytics network element or first indication information included in the first information is used to determine whether the at least one first data analytics network element supports the first capability, and the first indication information indicates to terminate a first service corresponding to the first capability. Before the first network element receives the first information from the second network element, the method further includes: The first network element sends a first request message to the second network element, where the first request message is used to request information about at least one data analytics network element.

For example, the first request message includes a first analytics identifier or a variant analytics identifier of the first analytics identifier, the variant analytics identifier corresponds to the first capability, and the capability information of the at least one first data analytics network element is used to determine whether the at least one first data analytics network element supports the first capability for the first analytics identifier.

For example, the variant analytics identifier of the first analytics identifier includes a variant analytics identifier #1 corresponding to the accuracy checking capability, a variant analytics identifier #2 corresponding to the analytics aggregation capability, or a variant analytics identifier #3 corresponding to the analytics metadata provisioning capability. If the capability information of the first data analytics network element #1 includes the variant analytics identifier #1, it indicates that the first data analytics network element #1 supports the accuracy checking capability for the first analytics identifier.

With reference to the first aspect, in some implementations of the first aspect, the second network element is a source data analytics network element, the source data analytics network element is configured to provide the analytics service for the first network element, the analytics service includes a first service corresponding to the first capability, capability information of the at least one first data analytics network element or second indication information included in the first information is used to determine whether the at least one first data analytics network element supports the first capability, and the second indication information indicates to terminate the first service.

With reference to the first aspect, in some implementations of the first aspect, the second network element is a target data analytics network element, the at least one first data analytics network element includes the target data analytics network element, capability information of the target data analytics network element or third indication information included in the first information is used to determine whether the target data analytics network element supports the first capability, and the third indication information indicates to terminate the first service corresponding to the first capability.

With reference to the first aspect, in some implementations of the first aspect, that the first network element determines, based on the first information, whether to subscribe to the analytics service from at least one second data analytics network element includes: The first network element determines, based on the first information, not to subscribe to the analytics service from the at least one second data analytics network element, where the first information is used to determine that the at least one first data analytics network element does not support the first capability.

For example, when the first data analytics network element is different from the second data analytics network element, the at least one first data analytics network element may be the target data analytics network element selected by the source data analytics network element, and the at least one second data analytics network element may be the source data analytics network element. In other words, when the target data analytics network element selected by the source data analytics network element does not support the first capability, the first network element determines not to no longer subscribe to an analytics service from the source data analytics network element. When the first network element no longer subscribes to the analytics service from the source data analytics network element, the first network element may be triggered to discover a new data analytics network element from the network repository function network element. This helps the first network element discover, from the network repository function network element, a data analytics network element that supports the first capability.

With reference to the first aspect, in some implementations of the first aspect, the method further includes: The first network element sends a first request to the source data analytics network element or the target data analytics network element. The first request includes fourth indication information, the fourth indication information indicates to pause subscription to or unsubscribe the analytics service, the source data analytics network element is configured to provide the analytics service for the first network element, the analytics service includes the first service corresponding to the first capability, and the at least one first data analytics network element includes the target data analytics network element.

According to the foregoing technical solution, when the first network element determines not to subscribe to the analytics service from the at least one second data analytics network element, if the first request sent by the first network element to the source data analytics network element includes the fourth indication information, the source data analytics network element may suspend or terminate, based on the fourth indication information, obtaining of an analytics result corresponding to the analytics service, and/or indicate the target data analytics network element to suspend or terminate obtaining of an analytics result corresponding to the analytics service, to reduce resource consumption of the source data analytics network element and/or the target data analytics network element. If the first request sent by the first network element to the target data analytics network element includes the fourth indication information, the target data analytics network element may suspend or terminate, based on the fourth indication information, obtaining of the analytics result corresponding to the analytics service, to reduce resource consumption of the source data analytics network element and/or the target data analytics network element.

With reference to the first aspect, in some implementations of the first aspect, the first request further includes fifth indication information, and the fifth indication information indicates that the at least one first data analytics network element does not support the first capability, or the fifth indication information indicates that the at least one first data analytics network element cannot provide the first service corresponding to the first capability.

With reference to the first aspect, in some implementations of the first aspect, that the first network element determines, based on the first information, whether to subscribe to the analytics service from the at least one second data analytics network element includes: The first network element subscribes to the analytics service from the at least one second data analytics network element based on the first information, where the second data analytics network element is a first data analytics network element that supports the first capability in the at least one first data analytics network element.

According to the foregoing technical solution, the first network element subscribes to the analytics service from the first data analytics network element that supports the first capability, to help obtain an analytics result required by the first network element.

With reference to the first aspect, in some implementations of the first aspect, the first network element receives the analytics result and service information from the at least one second data analytics network element, where the service information corresponds to the first service; and the first network element executes a first decision based on the analytics result, where the service information is used to determine, when the analytics result does not meet a requirement of the first network element on the level corresponding to the first capability, that a proportion of the analytics result in a factor for executing the first decision by the first network element does not exceed a threshold.

For example, the threshold is a proportion of an analytics result that meets the requirement of the first network element on the level corresponding to the first capability in the factor for executing the first decision by the first network element.

According to the foregoing technical solution, when the analytics result received by the first network element does not meet the requirement of the first network element on the level corresponding to the first capability, accuracy of the analytics result may not meet a requirement on accuracy of the analytics result when the first network element executes the first decision. Therefore, the first network element decreases the proportion of the analytics result 1 in the factor for executing the first decision by the first network element, to avoid adverse impact that may be caused by executing the first decision by the first network element based on the analytics result. For example, the analytics result is an analytics result for a location of UE. If the accuracy of the analytics result is insufficient, and an access management network element (an example of the first network element) performs paging completely based on the analytics result, it is very likely that the paging fails, causing a waste of signaling. If the access management network element decreases the proportion of the analytics result in the factor for performing paging, the access management network element may not perform paging completely based on the analytics result, for example, a paging range determined by the access management network element is larger than that in the analytics result, to increase a paging success probability.

With reference to the first aspect, in some implementations of the first aspect, the first network element sends sixth indication information to the at least one second data analytics network element, where the sixth indication information indicates to unsubscribe or pause subscription to the first service corresponding to the first capability.

It should be noted that, when the first network element unsubscribes to or pauses subscription to the first service corresponding to the first capability, the first network element may still subscribe to the analytics service from the at least one second data analytics network element, but the analytics service subscribed to by the first network element does not include the first service. According to the foregoing technical solution, a case in which the data analytics network element provides the first service for the first network element when the level corresponding to the first capability supported by the data analytics network element does not meet the requirement of the first network element can be avoided.

With reference to the first aspect, in some implementations of the first aspect, that the first network element determines, based on the first information, whether to subscribe to the analytics service from at least one second data analytics network element includes: The first network element determines, based on the first information, to subscribe to the analytics service from the at least one second data analytics network element, where the second data analytics network element is different from the first data analytics network element, and the first information is used to determine that the at least one first data analytics network element does not support the first capability.

According to the foregoing technical solution, if the at least one first data analytics network element does not support the first capability, the first network element subscribes to the analytics service from the second data analytics network element that supports the first capability. This avoids adverse impact caused by subscribing to the analytics service by the first network element from the first data analytics network element that does not support the first capability.

With reference to the first aspect, in some implementations of the first aspect, the first capability corresponds to the first service. The first capability includes the accuracy checking capability, and the first service includes providing analytics accuracy information; or the first capability includes the analytics aggregation capability, and the first service includes providing aggregation analytics; or the first capability includes the analytics metadata provisioning capability, and the first service includes providing analytics metadata information.

According to a second aspect, a communication method is provided. The method may be performed by a source data analytics network element, or may be performed by a component (for example, a chip or a circuit) of a source data analytics network element. This is not limited herein. Descriptions are provided below by using an example in which the method is performed by the source data analytics network element.

The source data analytics network element obtains information about at least one third data analytics network element. The source data analytics network element is configured to provide an analytics service for a first network element, the analytics service includes a first service corresponding to a first capability, and the first capability includes one or more of the following: an accuracy checking capability, an analytics aggregation capability, or an analytics metadata provisioning capability. The source data analytics network element sends first information to the first network element based on the information about the at least one third data analytics network element. Capability information of at least one first data analytics network element or second indication information included in the first information is used to determine whether the at least one first data analytics network element supports the first capability, the second indication information indicates to terminate the first service, and the at least one third data analytics network element includes the at least one first data analytics network element.

According to the foregoing technical solution, the source data analytics network element may discover the information about the at least one third data analytics network element from the network repository function network element, and send the first information to the first network element based on the information about the at least one third data analytics network element, so that the first network element can determine, based on the first information, whether the at least one first data analytics network element supports the first capability. When the first network element can determine whether the at least one first data analytics network element supports the first capability, adverse impact caused by subscribing to an analytics service by the first network element from a first data analytics network element that does not support the first capability can be avoided.

For example, if the information about the at least one third data analytics network element includes capability information of the at least one third data analytics network element, the first information includes the capability information of the at least one first data analytics network element.

For example, if the information about the at least one third data analytics network element includes the capability information of the at least one third data analytics network element, and the capability information of the at least one third data analytics network element is used to determine that the at least one third data analytics network element does not support the first capability, the first information includes second indication information.

For example, if the information about the at least one third data analytics network element does not include the capability information of the at least one third data analytics network element, the first information includes the second indication information.

With reference to the second aspect, in some implementations of the second aspect, the method further includes: The source data analytics network element sends seventh indication information to the at least one first data analytics network element, where the seventh indication information indicates that a first analytics context related to the analytics service includes a context related to the first service, or the seventh indication information indicates that the first network element subscribes to the first service.

According to the foregoing technical solution, the source data analytics network element sends the seventh indication information to the at least one first data analytics network element, and the first data analytics network element can determine, based on the seventh indication information, that the first network element subscribes to the first service corresponding to the first capability, so that the first data analytics network element may send the first information to the first network element based on a capability of the first data analytics network element. In this case, the first network element determines, based on the first information, whether the first data analytics network element supports the first capability.

With reference to the second aspect, in some implementations of the second aspect, the method further includes: The source data analytics network element receives a first request from the first network element, where the first request includes fourth indication information, and the fourth indication information indicates to unsubscribe or pause subscription to the analytics service.

According to the foregoing technical solution, when the first network element determines not to subscribe to the analytics service from the at least one first data analytics network element, if the first request sent by the first network element to the source data analytics network element includes the fourth indication information, the source data analytics network element may suspend or terminate, based on the fourth indication information, obtaining of an analytics result corresponding to the analytics service, and/or indicate the target data analytics network element to suspend or terminate obtaining of an analytics result corresponding to the analytics service, to reduce resource consumption of the source data analytics network element and/or the target data analytics network element.

With reference to the second aspect, in some implementations of the second aspect, the first request further includes fifth indication information, and the fifth indication information indicates that the at least one first data analytics network element does not support the first capability, or the fifth indication information indicates that the at least one first data analytics network element cannot provide the first service.

With reference to the second aspect, in some implementations of the second aspect, the method further includes: The source data analytics network element sends a second analytics context related to the analytics service to the at least one first data analytics network element, where the second analytics context does not include the context related to the first service; or the source data analytics network element sends a third request message to the network repository function network element, where the third request message is used to request information about at least one data analytics network element.

With reference to the second aspect, in some implementations of the second aspect, the method further includes: The source data analytics network element receives eighth indication information from the target data analytics network element, where the eighth indication information indicates to unsubscribe or pause subscription to the first service corresponding to the first capability, and the at least one first data analytics network element includes the target data analytics network element; and the source data analytics network element sends a second analytics context of the analytics service to the target data analytics network element.

According to the foregoing technical solution, the source data analytics network element sends the second analytics context to the target data analytics network element based on the eighth indication information, to avoid an error reported because the target data analytics network element does not support parsing of the context related to the first service, or avoid an error reported because the target data analytics network element cannot provide the first service requested by the first network element.

With reference to the second aspect, in some implementations of the second aspect, the first capability includes the accuracy checking capability, and the first service includes providing the analytics accuracy information; or the first capability includes the analytics aggregation capability, and the first service includes providing the aggregation analytics; or the first capability includes the analytics metadata provisioning capability, and the first service includes providing the analytics metadata information.

According to a third aspect, a communication method is provided. The method may be performed by a target data analytics network element, or may be performed by a component (for example, a chip or a circuit) of a target data analytics network element. This is not limited herein. Descriptions are provided below by using an example in which the method is performed by the target data analytics network element.

The method includes: The target data analytics network element receives seventh indication information from a source data analytics network element, where the seventh indication information indicates that a first analytics context related to an analytics service includes a context related to a first service, or the seventh indication information indicates that a first network element subscribes to the first service, the source data analytics network element is configured to provide an analytics service for the first network element, the analytics service includes the first service corresponding to a first capability, and the first capability includes one or more of the following: an accuracy checking capability, an analytics aggregation capability, or an analytics metadata provisioning capability; and the target data analytics network element sends first information to the first network element based on the seventh indication information, where capability information of the target data analytics network element or third indication information included in the first information is used to determine whether the target data analytics network element supports the first capability, and the third indication information indicates to terminate the first service.

According to the foregoing technical solution, the source data analytics network element sends the seventh indication information to the target data analytics network element, so that the target data analytics network element may send the first information to the first network element based on the seventh indication information. In this case, the first network element can determine, based on the first information, whether the target data analytics network element supports the first capability. When the first network element can determine whether the target data analytics network element supports the first capability, adverse impact caused by subscribing to the analytics service by the first network element from the target data analytics network element that does not support the first capability can be avoided.

With reference to the third aspect, in some implementations of the third aspect, the method further includes: The target data analytics network element receives a first request from the first network element, where the first request includes fourth indication information, and the fourth indication information indicates to unsubscribe or pause subscription to the analytics service.

According to the foregoing technical solution, when the first network element determines not to subscribe to the analytics service from the target data analytics network element, if the first request sent by the first network element to the target data analytics network element includes the fourth indication information, the target data analytics network element may suspend or terminate, based on the fourth indication information, obtaining of the analytics result corresponding to the analytics service, to reduce resource consumption of the target data analytics network element.

With reference to the third aspect, in some implementations of the third aspect, the method further includes: The target data analytics network element obtains information about at least one fourth data analytics network element; and the target data analytics network element sends second information to the first network element based on the information about the at least one fourth data analytics network element, where capability information of at least one fifth data analytics network element or ninth indication information included in the second information is used to determine whether the at least one fifth data analytics network element supports the first capability, the ninth indication information indicates to terminate the first service, and the at least one fourth data analytics network element includes the at least one fifth data analytics network element.

According to the foregoing technical solution, the target data analytics network element discovers the fifth data analytics network element that supports the first capability, so that after the first data analytics network element sends the second information to the first network element, the first network element may subscribe, based on the second information, to the analytics service from the fifth data analytics network element that supports the first capability.

With reference to the third aspect, in some implementations of the third aspect, the method further includes: The target data analytics network element receives sixth indication information from the first network element, where the sixth indication information indicates to unsubscribe or pause subscription to the first service; the target data analytics network element sends eighth indication information to the source data analytics network element, where the eighth indication information indicates to unsubscribe or pause subscription to the first service; and the target data analytics network element receives a second analytics context related to the analytics service from the source data analytics network element, where the second analytics context does not include a context related to the first service.

According to the foregoing technical solution, the source data analytics network element sends the second analytics context to the target data analytics network element based on the eighth indication information, to avoid an error reported because the target data analytics network element does not support parsing of the context related to the first service, or avoid an error reported because the target data analytics network element cannot provide the first service requested by the first network element.

With reference to the third aspect, in some implementations of the third aspect, the first capability includes the accuracy checking capability, and the first service includes providing the analytics accuracy information; or the first capability includes the analytics aggregation capability, and the first service includes providing the aggregation analytics; or the first capability includes the analytics metadata provisioning capability, and the first service includes providing the analytics metadata information.

According to a fourth aspect, a communication method is provided. The method may be performed by a network repository function network element, or may be performed by a component (for example, a chip or a circuit) of a network repository function network element. This is not limited. Descriptions are provided below by using an example in which the method is performed by the network repository function.

The method includes: The network repository function network element receives a request message from a third network element, where the request message is used to request information about at least one data analytics network element; and the network repository function network element sends the information about the at least one data analytics network element to a third network element, where the information about the at least one data analytics network element includes capability information of the at least one data analytics network element, the capability information of the at least one data analytics network element indicates whether the at least one data analytics network element supports a first capability, and the first capability includes one or more of the following: an accuracy checking capability, an analytics aggregation capability, or an analytics metadata provisioning capability.

According to the foregoing technical solution, the information that is about the at least one data analytics network element and that is sent by the network repository function network element to the third network element includes the capability information of the at least one data analytics network element. This helps avoid adverse impact caused by subscribing to an analytics service by a first network element from a data analytics network element that does not support the first capability. For example, if the third network element is the first network element, the first network element can determine, based on the capability information of the at least one data analytics network element, whether to subscribe to the analytics service from the at least one data analytics network element. This helps avoid adverse impact caused by subscribing to the analytics service by the first network element from the data analytics network element that does not support the first capability.

For example, the request message includes a first analytics identifier, and the capability information of the at least one data analytics network element indicates whether the at least one data analytics network element supports the first capability for the first analytics identifier.

With reference to the fourth aspect, in some implementations of the fourth aspect, the first capability corresponds to a first service. The first capability includes the accuracy checking capability, and the first service includes providing analytics accuracy information; or the first capability includes the analytics aggregation capability, and the first service includes providing aggregation analytics; or the first capability includes the analytics metadata provisioning capability, and the first service includes providing analytics metadata information.

According to a fifth aspect, a communication method is provided. The method includes: A second network element sends first information to a first network element, where the first information is used to determine whether at least one first data analytics network element supports a first capability, and the first capability includes one or more of the following: an accuracy checking capability, an analytics aggregation capability, or an analytics metadata provisioning capability; and the first network element determines, based on the first information, whether to subscribe to an analytics service from at least one second data analytics network element, where the second data analytics network element is the same as or different from the first data analytics network element.

According to the foregoing technical solution, after receiving the first information from the second network element, the first network element can determine, based on the first information, whether the at least one first data analytics network element supports the first capability, so that the first network element can determine, based on a capability of the at least one first data analytics network element, whether to subscribe to the analytics service from the at least one second data analytics network element. This avoids adverse impact caused by subscribing to the analytics service by the first network element from the first data analytics network element that does not support the first capability.

According to a sixth aspect, a communication method is provided. The method includes: A source data analytics network element obtains information about at least one third data analytics network element; where the source data analytics network element is configured to provide an analytics service for a first network element, the analytics service includes a first service corresponding to a first capability, and the first capability includes one or more of the following: an accuracy checking capability, an analytics aggregation capability, or an analytics metadata provisioning capability; the source data analytics network element sends first information to the first network element based on the information about the at least one third data analytics network element, where capability information of at least one first data analytics network element or second indication information included in the first information is used to determine whether the at least one first data analytics network element supports the first capability, the second indication information indicates to terminate the first service, and the at least one third data analytics network element includes the at least one first data analytics network element; and the first network element determines, based on the first information, whether to subscribe to an analytics service from at least one second data analytics network element, where the second data analytics network element is the same as or different from the first data analytics network element.

According to the foregoing technical solution, the source data analytics network element may discover the information about the at least one third data analytics network element from the network repository function network element, and send the first information to the first network element based on the information about the at least one third data analytics network element, so that the first network element can determine, based on the first information, whether the at least one first data analytics network element supports the first capability. When the first network element can determine whether the at least one first data analytics network element supports the first capability, adverse impact caused by subscribing to an analytics service by the first network element from a first data analytics network element that does not support the first capability can be avoided.

According to a seventh aspect, a communication method is provided. The method includes: A source data analytics network element sends seventh indication information to a target data analytics network element, where the seventh indication information indicates that a first analytics context related to an analytics service includes a context related to a first service, or the seventh indication information indicates that a first network element subscribes to the first service, the source data analytics network element is configured to provide an analytics service for the first network element, the analytics service includes the first service corresponding to a first capability, and the first capability includes one or more of the following: an accuracy checking capability, an analytics aggregation capability, or an analytics metadata provisioning capability; the target data analytics network element sends first information to the first network element based on the seventh indication information, where capability information of the target data analytics network element or third indication information included in the first information is used to determine whether the target data analytics network element supports the first capability, and the second indication information indicates to terminate the first service; and the first network element determines, based on the first information, whether to subscribe to the analytics service from the target data analytics network element.

According to the foregoing technical solution, the source data analytics network element sends the seventh indication information to the target data analytics network element, so that the target data analytics network element may send the first information to the first network element based on the seventh indication information. In this case, the first network element can determine, based on the first information, whether the target data analytics network element supports the first capability. When the first network element can determine whether the target data analytics network element supports the first capability, adverse impact caused by subscribing to the analytics service by the first network element from the target data analytics network element that does not support the first capability can be avoided.

According to an eighth aspect, a communication apparatus is provided. The communication apparatus has a function of implementing the method according to any one of the first aspect or the possible implementations of the first aspect. The function may be implemented by using hardware, or may be implemented by hardware executing corresponding software. The hardware or the software includes one or more units, for example, a transceiver unit and/or a processing unit, corresponding to the foregoing function.

According to a ninth aspect, a communication apparatus is provided. The communication apparatus has a function of implementing the method according to any one of the second aspect or the possible implementations of the second aspect. The function may be implemented by using hardware, or may be implemented by hardware executing corresponding software. The hardware or the software includes one or more units, for example, a transceiver unit and/or a processing unit, corresponding to the foregoing function.

According to a tenth aspect, a communication apparatus is provided. The communication apparatus has a function of implementing the method according to any one of the third aspect or the possible implementations of the third aspect. The function may be implemented by using hardware, or may be implemented by hardware executing corresponding software. The hardware or the software includes one or more units, for example, a transceiver unit and/or a processing unit, corresponding to the foregoing function.

According to an eleventh aspect, a communication apparatus is provided. The communication apparatus has a function of implementing the method according to any one of the fourth aspect or the possible implementations of the fourth aspect. The function may be implemented by using hardware, or may be implemented by hardware executing corresponding software. The hardware or the software includes one or more units, for example, a transceiver unit and/or a processing unit, corresponding to the foregoing function.

According to a twelfth aspect, a communication apparatus is provided, and includes a processor. The processor is coupled to a memory, and may be configured to execute instructions in the memory, to implement the method according to any one of the first aspect and the possible implementations of the first aspect. For example, the communication apparatus further includes the memory. For example, the communication apparatus further includes a communication interface, and the processor is coupled to the communication interface.

In an implementation, the communication apparatus is a first network element. When the communication apparatus is the first network element, the communication interface may be a transceiver or an input/output interface.

In another implementation, the communication apparatus is a chip disposed in the first network element. When the communication apparatus is the chip disposed in the first network element, the communication interface may be an input/output interface.

For example, the transceiver may be a transceiver circuit. For example, the input/output interface may be an input/output circuit.

According to a thirteenth aspect, a communication apparatus is provided, and includes a processor. The processor is coupled to a memory, and may be configured to execute instructions in the memory, to implement the method according to any one of the second aspect and the possible implementations of the second aspect. For example, the communication apparatus further includes the memory. For example, the communication apparatus further includes a communication interface, and the processor is coupled to the communication interface.

In an implementation, the communication apparatus is a source data analytics network element. When the communication apparatus is the source data analytics network element, the communication interface may be a transceiver or an input/output interface.

In another implementation, the communication apparatus is a chip disposed in the source data analytics network element. When the communication apparatus is the chip disposed in the source data analytics network element, the communication interface may be an input/output interface. For example, the transceiver may be a transceiver circuit. For example, the input/output interface may be an input/output circuit.

According to a fourteenth aspect, a communication apparatus is provided, and includes a processor. The processor is coupled to a memory, and may be configured to execute instructions in the memory, to implement the method according to the third aspect and any one of the possible implementations of the third aspect. For example, the communication apparatus further includes the memory. For example, the communication apparatus further includes a communication interface, and the processor is coupled to the communication interface.

In an implementation, the communication apparatus is a target data analytics network element. When the communication apparatus is the target data analytics network element, the communication interface may be a transceiver or an input/output interface.

In another implementation, the communication apparatus is a chip disposed in the target data analytics network element. When the communication apparatus is the chip disposed in the target data analytics network element, the communication interface may be an input/output interface. For example, the transceiver may be a transceiver circuit. For example, the input/output interface may be an input/output circuit.

According to a fifteenth aspect, a communication apparatus is provided, including a processor. The processor is coupled to a memory, and may be configured to execute instructions in the memory, to implement the method according to any one of the fourth aspect and the possible implementations of the fourth aspect. For example, the communication apparatus further includes the memory. For example, the communication apparatus further includes a communication interface, and the processor is coupled to the communication interface.

In an implementation, the communication apparatus is a network repository function network element. When the communication apparatus is the network repository function network element, the communication interface may be a transceiver or an input/output interface.

In another implementation, the communication apparatus is a chip disposed in a network repository function network element. When the communication apparatus is the chip disposed in the network repository function network element, the communication interface may be an input/output interface.

For example, the transceiver may be a transceiver circuit. For example, the input/output interface may be an input/output circuit.

According to a sixteenth aspect, a processor is provided, including an input circuit, an output circuit, and a processing circuit. The processing circuit is configured to: receive a signal by using the input circuit, and transmit a signal by using the output circuit, so that the processor performs the method according to any one of the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventeenth aspect, a processing apparatus is provided, including a processor and a memory. The processor is configured to read an instruction stored in the memory, receive a signal via a receiver, transmit a signal via a transmitter, and perform the method according to any one of the possible implementations of the first aspect to the fourth aspect.

For example, there are one or more processors, and there are one or more memories.

For example, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that a related data exchange process, for example, sending first information, may be a process of outputting the first information from the processor, and receiving the first information may be a process of receiving the first information by the processor. Specifically, data output by the processor may be output to the transmitter, and input data received by the processor may be from the receiver. The transmitter and the receiver may be collectively referred to as a transceiver.

The processing apparatus in the seventeenth aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to an eighteenth aspect, a computer program product is provided. The computer program product includes a computer program (which may also be referred to as code or instructions), and when the computer program is run, a computer is caused to perform the method according to any one of the possible implementations of the first aspect to the fourth aspect.

According to a nineteenth aspect, a computer-readable storage medium is provided. The computer-readable storage medium stores a computer program (which may also be referred to as code or instructions), and when the computer program is run on a computer, the method according to any one of the possible implementations of the first aspect to the fourth aspect is performed.

According to a twentieth aspect, a communication system is provided. The communication system includes the foregoing first network element and second network element. The first network element is configured to perform the method according to any one of the first aspect and the possible implementations of the first aspect, and the second network element is configured to perform the method according to any one of the second aspect and the possible implementations of the second aspect, or the second network element is configured to perform the method according to any one of the third aspect and the possible implementations of the third aspect, or the second network element is configured to perform the method according to any one of the fourth aspect and the possible implementations of the fourth aspect.

### BRIEF DESCRIPTION OF DRAWINGS

FIG. 1 is a diagram of a communication system applicable to a method according to an embodiment of this application;
FIG. 2 is a schematic flowchart of a communication method according to an embodiment of this application;
FIG. 3 is a schematic flowchart of a communication method according to an embodiment of this application;
FIG. 4A and FIG. 4B are a schematic flowchart of a communication method according to an embodiment of this application;
FIG. 5 is a schematic flowchart of a communication method according to an embodiment of this application;
FIG. 6 is a block diagram of a communication apparatus according to an embodiment of this application;
FIG. 7 is a block diagram of a communication device according to another embodiment of this application; and
FIG. 8 is a diagram of a chip system according to an embodiment of this application.

### DESCRIPTION OF EMBODIMENTS

The following describes the technical solutions in this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, a 6th generation (6th generation, 6G) system or a future communication system, or the like. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a sidelink (sidelink) communication system, a machine-to-machine (machine-to-machine, M2M) communication system, an internet of things (internet of things, IoT) communication system, a vehicle-to-everything (vehicle-to-everything, V2X) communication system, an uncrewed aerial vehicle (uncrewed aerial vehicle, UAV) communication system, or another communication system.

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one (piece) of a, b, or c may represent: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to give an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

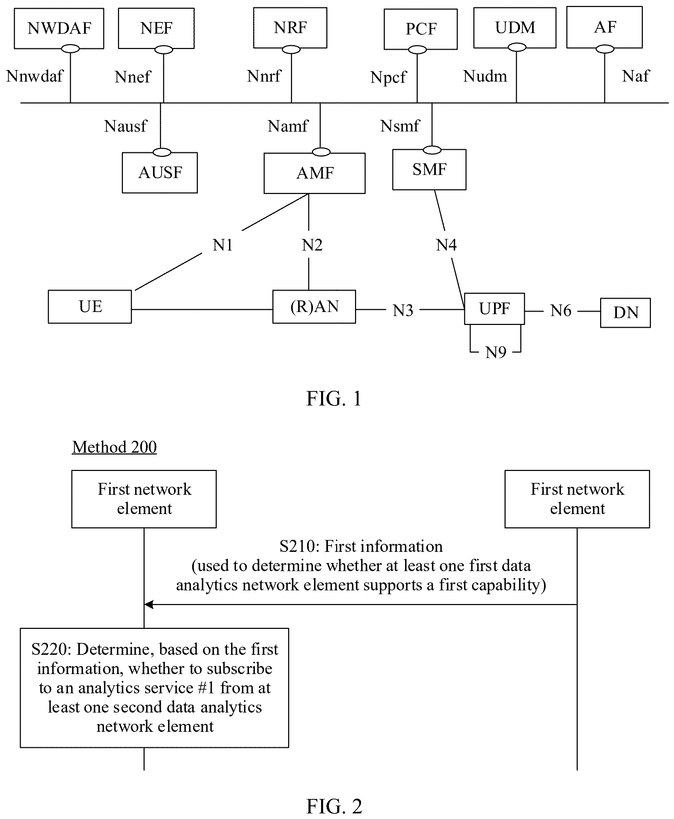

For ease of understanding of embodiments of this application, an application scenario of embodiments of this application is first described in detail with reference to FIG. 1.

A system architecture shown in FIG. 1 may include the following devices.
1. User equipment (user equipment, UE): The user equipment may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved PLMN, or the like. This is not limited in embodiments of this application.
2. Access network (access network, AN): The access network is used to provide a network access function for an authorized user in a specific area, and can use transmission tunnels with different quality based on user levels, service requirements, and the like. The access network may be an access network using different access technologies. Conventional access network technologies include: a radio access network technology used in a 3rd generation (3rd generation, 3G) system, a radio access network technology used in a 4th generation (4th generation, 4G) system, or a next generation radio access network (next generation radio access network, NG-RAN) technology (for example, a radio access technology used in a 5G system).

An access network that implements an access network function based on a wireless communication technology may be referred to as a radio access network (radio access network, RAN). The radio access network can manage radio resources, provide an access service for terminals, and further complete forwarding of control signals and user data between terminals and a core network.

The radio access network device may be, for example, a base station (NodeB), an evolved NodeB (evolved NodeB, eNB or eNodeB), a next generation node base station (next generation Node base station, gNB) in a 5G mobile communication system, a base station in a future mobile communication system, or an access point (access point, AP) in a Wi-Fi wireless hotspot system, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology used by the radio access network device and a specific device form are not limited in embodiments of this application.

3. Access management network element: The access management network element is mainly used for mobility management and access management, is responsible for providing transport for user policies between user equipment and policy control function (policy control function, PCF) network elements, and may be configured to implement functions other than session management in a mobility management entity (mobility management entity, MME) function, for example, an access authorization (authentication) function.

In the 5G communication system, the access management network element may be an access and mobility management function (access and mobility management function, AMF) network element. In a future communication system, the access management network element may be the AMF network element, or may have another name. This is not limited in this application.

4. Session management network element: The session management network element is mainly configured for session management, user equipment internet protocol (internet protocol, IP) address allocation and management, selection and management of a user plane function, termination of interfaces towards policy control and charging functions, downlink data communication, and the like.

In the 5G communication system, the session management network element may be a session management function (session management function, SMF) network element. In the future communication system, the session management network element may be an SMF network element, or may have another name. This is not limited in this application.

5. User plane network element: The user plane network element is configured for packet routing and forwarding, quality of service (quality of service, QoS) handling for user plane data, user plane data forwarding, session/flow-level-based charging statistics collection, bandwidth limitation, and the like.

In the 5G communication system, the user plane network element may be a user plane function (user plane function, UPF) network element. In the future communication system, the user plane network element may be a UPF network element, or may have another name. This is not limited in this application.

6. Data network element: The data network element is configured to provide a network for data transmission.

In the 5G communication system, the data network element may be a data network (data network, DN) element. In the future communication system, the data network element may be a DN network element, or may have another name. This is not limited in this application.

7. Policy control network element: The policy control network element is configured to: provide a unified policy framework to govern network behavior, provide policy rule information to control plane function network elements (for example, the AMF network element or the SMF network element), and the like.

In a 4G communication system, the policy control network element may be a policy and charging rules function (policy and charging rules function, PCRF) network element. In the 5G communication system, the policy control network element may be a PCF network element. In the future communication system, the policy control network element may be a PCF network element, or may have another name. This is not limited in this application.

8. Data management network element: The data management network element is configured for user equipment identification handling, access authentication, registration management, mobility management, and the like.

In the 4G communication system, the data management network element may be a home subscriber server (home subscriber server, HSS) network element. In the 5G communication system, the data management network element may be a unified data management (unified data management, UDM) network element. In the future communication system, the data management network element may be a UDM network element, or may have another name. This is not limited in this application.

9. Network exposure function (network exposure function, NEF) network element: The network exposure function network element is configured for secure external exposure of services and capabilities that are provided by a 3rd generation partnership project (3rd generation partnership project, 3GPP) network function.

10. Application function (application function, AF) network element: The application function network element provides application layer services for UEs. When providing the services for UEs, the AF has requirements on a QoS policy and a charging (charging) policy, and needs to notify a network. In addition, the AF also needs to obtain application-related information fed back by the core network. The AF may have all functions of the AF defined in the technology specification (technology specification, TS) 23.501 R-15, and have relevant functions for application services. In other words, in a user plane architecture, an application server and the UE perform user plane communication through a path of UE-RAN-UPF-AF. The AF may further communicate, in a control plane architecture via the NEF, with other network functions (network function, NF) in a 5G core network (5G core network, 5GC), for example, communicate with the PCF via the NEF. If the AF is arranged by a 5GC operator, the AF may alternatively be in a control plane architecture, that is, the AF is in a trusted zone, and directly communicates with other NFs in the 5GC without via the NEF, for example, directly communicates with a PCF.

11. Network data analytics function (network data analysis function, NWDAF) network element: The network data analytics function network element may be configured for data collection from network elements, AFs, and an operations, administration, and maintenance (operations, administration, and maintenance, OAM) system side, data analytics by using solutions such as machine learning and artificial intelligence, and data provisioning to the network elements, the AFs, and the like for network or service configuration optimization, to provide better network quality and service experience.

12. Network repository function (network repository function, NRF) network element: The network repository function network element may be configured to provide, via a network element discovery function, network element information corresponding to network element types based on requests from other network elements. The NRF may further provide network element management services such as network element registration, update, and deregistration, network element status subscription and push, and the like.

13. Authentication server function (authentication server function, AUSF) network element: The authentication server function network element is mainly responsible for user authentication, to determine whether to allow a user or a device to access the network.

In FIG. 1, N1, N2, N3, N4, N6, N9, Nnwdaf, Nnef, Nnrf, Npcf, Nudm, Naf, Nausf, Namf, and Nsmf are interface sequence numbers. For meanings of the interface sequence numbers, refer to meanings defined in 3GPP TS 23.501.

It should be understood that the foregoing network architecture used in embodiments of this application is merely an example for description, and a network architecture applicable to embodiments of this application is not limited thereto. Any network architecture that can implement the functions of the foregoing network elements is applicable to embodiments of this application.

It should be further understood that the AMF, the SMF, the UPF, the NEF, the PCF, the UDM, the NWDAF, the NRF, the AUSF, and the like shown in FIG. 1 may be understood as network elements configured to implement different functions in the core network, for example, may be combined as required to form network slices. These core network elements may be individual devices, or may be integrated into a same device to implement different functions. A specific form of the foregoing network elements is not limited in this application.

It should be further understood that the foregoing names are defined merely for distinguishing between different functions, and should not constitute any limitation on this application. This application does not exclude a possibility that another name is used in the 5G network and another future network. For example, in the 6G network, a part or all of the foregoing network elements may still use terms in 5G, or may use other names. A name of an interface between network elements in FIG. 1 is merely an example. In specific implementation, the name of the interface may be another name. This is not limited in this application.

Due to factors such as the mobility of the UE, changes in a location of of an NWDAF service consumer (service consumer) (also referred to as analytics consumer (analytics consumer)), and the need for load balancing between a plurality of NWDAFs, in a multi-NWDAF deployment scenario, a source NWDAF (an NWDAF being used) and a target NWDAF (a new NWDAF to be used) may use a process of transferring analytics context (analytics context) and analytics subscription (analytics subscription), to allow the target NWDAF to generate an analytics result required by the analytics consumer.

Before the source NWDAF starts analytics subscription transfer to the target NWDAF, the analytics consumer or the source NWDAF may discover and select the target NWDAF. However, the target NWDAF selected by the analytics consumer or the source NWDAF may not support a first capability. Therefore, the target NWDAF cannot provide a first service that corresponds to the first capability and that is subscribed to by the analytics consumer.

In view of this, an embodiment of this application provides a communication method, to avoid adverse impact caused by the inability of an analytics consumer to select an NWDAF that supports a first capability.

FIG. 2 is a schematic flowchart of a communication method 200 according to an embodiment of this application. The following describes in detail steps included in the method 200.

S210: A second network element sends first information to a first network element. Correspondingly, the first network element receives the first information from the second network element.

For example, the first network element may be referred to as an analytics consumer or an NWDAF service consumer.

The first information is used to determine whether at least one first data analytics network element supports a first capability. The first capability includes one or more of the following: an accuracy checking capability, an analytics aggregation capability (analytics aggregation capability), or an analytics metadata provisioning capability (analytics metadata provisioning capability).

A first data analytics network element #1 in the at least one first data analytics network element is used as an example. That the first data analytics network element #1 supports the accuracy checking capability means that the first data analytics network element #1 supports providing an accuracy checking function for a consumer (consumer NF). For example, an analytics logical function (analytics logical function, AnLF) (a data analytics network element) that supports the accuracy checking capability can provide the analytics consumer with or notify the analytics consumer of accuracy information of an analytics identifier (identifier, ID), and notify the consumer when accuracy of the analytics ID does not meet a requirement of the analytics consumer. A model training logical function (model training logical function, MTLF) (a data analytics network element) that supports the accuracy checking capability can determine degradation of a model training (model training, ML) model and indicate degradation of the ML model to the analytics consumer. That the first data analytics network element #1 does not support the accuracy checking capability means that the first data analytics network element #1 does not support providing the accuracy checking function for the consumer.

The first data analytics network element #1 is used as an example. That the first data analytics network element #1 supports the analytics aggregation capability means that the first data analytics network element #1 supports aggregation (namely, summarization, combination, and algorithm processing) of analytics results from one or more other data analytics network elements, to provide an aggregated analytics result for the first network element. That the first data analytics network element #1 does not support the analytics aggregation capability means that the first data analytics network element #1 does not support aggregation of the analytics results from the one or more other data analytics network elements.

The first data analytics network element #1 is used as an example. That the first data analytics network element #1 supports the analytics metadata provisioning capability means that, when the first data analytics network element #1 needs to aggregate output analytics, the first data analytics network element #1 supports requesting and exchanging "analytics metadata information" from and with other data analytics network elements. The "analytics metadata information" is additional information associated with the analytics ID requested by the first network element, and may include, for example, one or more of the following information: a quantity of data samples used for generation of output analytics, a data time window of the data samples, dataset statistical properties of an analytics output used for generation of the analytics, a data source of data used for generation of the output analytics; a data format and processing applied on the data; and an output strategy used for reporting of the analytics. That the first data analytics network element #1 does not support the analytics metadata provisioning capability means that the first data analytics network element #1 does not support requesting and exchanging the "analytics metadata information" from and with other data analytics network elements.

Optionally, the first information is used to determine whether the at least one first data analytics network element supports the first capability for a first analytics identifier.

It should be understood that, when the first data analytics network element supports the first capability for the first analytics identifier, the first data analytics network element does not necessarily support the first capability for a second analytics identifier. When the first data analytics network element does not support the first capability for the first analytics identifier, the first data analytics network element does not necessarily not support the first capability for the second analytics identifier. The second analytics identifier is different from the first analytics identifier. In other words, an analytics service corresponding to the first analytics identifier is different from an analytics service corresponding to the second analytics identifier.

Optionally, when the first information is used to determine that one or more first data analytics network elements in the at least one first data analytics network element support the first capability, the first information is further used to determine a level corresponding to the first capability supported by the one or more first data analytics network elements.

The first data analytics network element #1 is used as an example. A level corresponding to the accuracy checking capability supported by the first data analytics network element #1 indicates that the first data analytics network element #1 includes accuracy that can be provided, for example, accuracy corresponding to a current analytics ID. For example, if the level corresponding to the accuracy checking capability supported by the first data analytics network element #1 is a level #1, it indicates that the accuracy that can be provided by the first data analytics network element #1 is accuracy #1.

The first data analytics network element #1 is used as an example. A level corresponding to the analytics aggregation capability supported by the first data analytics network element #1 indicates one or more of the following supported by the first data analytics network element #1: a supported service area, a supported analytics ID, and the like. For example, if the level corresponding to the analytics aggregation capability supported by the first data analytics network element #1 is a level #a, it indicates that the first data analytics network element #1 may support a service area #a and/or an analytics ID #a.

The first data analytics network element #1 is used as an example. A level corresponding to the analytics metadata provisioning capability supported by the first data analytics network element #1 indicates a metadata category supported by the first data analytics network element #1. For example, if the level corresponding to the analytics aggregation capability supported by the first data analytics network element #1 is a level #A, it is identified that metadata supported by the first data analytics network element #1 includes one or more of the following: a quantity of data samples used for generation of data analytics and a data time window of the data sample.

The following describes the second network element and first information corresponding to different second network elements.

In a possible implementation, the second network element is a network repository function network element, the first information includes capability information of the at least one first data analytics network element or first indication information, and the capability information of the at least one first data analytics network element or the first indication information is used to determine whether the at least one first data analytics network element supports the first capability. The capability information of the at least one first data analytics network element includes capability information of each first data analytics network element in the at least one first data analytics network element. The first data analytics network element #1 in the at least one first data analytics network element is used as an example. Capability information of the first data analytics network element #1 includes information about a capability supported by the first data analytics network element #1. If the capability information of the first data analytics network element #1 includes information about the first capability, it indicates that the first data analytics network element #1 supports the first capability. If the capability information of the first data analytics network element #1 does not include the information about the first capability, it indicates that the first data analytics network element #1 does not support the first capability. For example, the information about the first capability may include a name of the first capability and/or an identifier corresponding to the first capability. For example, information about the accuracy checking capability may include a name of the accuracy checking capability (namely, accuracy checking (accuracy checking)) or an identifier #1 corresponding to the accuracy checking capability. Information about the analytics aggregation capability may include a name of the analytics aggregation capability (namely, analytics aggregation) or an identifier #2 corresponding to the analytics aggregation capability. The analytics metadata provisioning capability may include a name of the analytics metadata provisioning capability (namely, analytics metadata provisioning) or an identifier #3 corresponding to the analytics metadata provisioning capability.

Optionally, the capability information of the at least one first data analytics network element is used to determine whether the at least one first data analytics network element supports the first capability for the first analytics identifier. The first data analytics network element #1 is used as an example. If the capability information of the first data analytics network element #1 includes the information about the first capability and the first analytics identifier, it indicates that the first data analytics network element #1 supports the first capability for the first analytics identifier. Alternatively, if the capability information of the first data analytics network element #1 includes a variant analytics identifier of the first analytics identifier, and the variant analytics identifier corresponds to the first capability, it indicates that the first data analytics network element #1 supports the first capability for the first analytics identifier. For example, the variant analytics identifier of the first analytics identifier includes a variant analytics identifier #1 corresponding to the accuracy checking capability, a variant analytics identifier #2 corresponding to the analytics aggregation capability, or a variant analytics identifier #3 corresponding to the analytics metadata provisioning capability. If the capability information of the first data analytics network element #1 includes the variant analytics identifier #1, it indicates that the first data analytics network element #1 supports the accuracy checking capability for the first analytics identifier.

Optionally, when the capability information of the first data analytics network element #1 includes the information about the first capability, the capability information of the first data analytics network element #1 may further include level information corresponding to the first capability, and the level information corresponding to the first capability is used to determine a level corresponding to the first capability supported by the first data analytics network element #1. The first indication information indicates to terminate a first service corresponding to the first capability. It should be understood that, when the first indication information indicates to terminate the first service, it is equivalent to that the first indication information is used to determine that the at least one first data analytics network element does not support the first capability, or is used to determine that the at least one first data analytics network element cannot provide the first service. The first capability includes the accuracy checking capability, and the first service includes providing analytics accuracy information. If the first capability includes the analytics aggregation capability, the first service includes providing aggregation analytics. If the first capability includes the analytics metadata provisioning capability, the first service includes providing analytics metadata information.

For more descriptions of receiving, by the first network element, the first information from the network repository function network element, refer to the following method 300. For brevity, details are not described herein.

In a possible implementation, the second network element is a source data analytics network element. The first information includes capability information of the at least one first data analytics network element or second indication information. The capability information of the at least one first data analytics network element or the second indication information is used to determine whether the at least one first data analytics network element supports the first capability. The source data analytics network element is configured to provide an analytics service #1 for the first network element. The analytics service #1 includes the first service. In other words, the source data analytics network element supports the first capability. Optionally, a level corresponding to the first capability supported by the source data analytics network element meets a requirement (also referred to as a demand) of the first network element on the level corresponding to the first capability, that is, the level corresponding to the first capability supported by the source data analytics network element is not lower than a requirement of the first network element on the level corresponding to the first capability.

For descriptions of the capability information of the at least one first data analytics network element, refer to the foregoing descriptions.

The second indication information indicates to terminate the first service corresponding to the first capability. It should be understood that, when the second indication information indicates to terminate the first service, it is equivalent to that the second indication information is used to determine that the at least one first data analytics network element does not support the first capability, or is used to determine that the at least one first data analytics network element cannot provide the first service.

Optionally, the first information further includes capability information of the source data analytics network element. The capability information of the source data analytics network element is used to determine whether the source data analytics network element supports the first capability.

If the first capability is the accuracy checking capability, the requirement of the first network element on the level corresponding to the first capability is a requirement of the first network element on accuracy provided by the data analytics network element. If an accuracy checking capability supported by a data analytics network element meets a requirement of the first network element on a level of the accuracy checking capability, it indicates that accuracy provided by the data analytics network element is not lower than a requirement of the first network element for accuracy. If an accuracy checking capability supported by a data analytics network element does not meet the requirement of the first network element on the level of the accuracy checking capability, it indicates that accuracy provided by the data analytics network element is lower than the requirement of the first network element for accuracy.

If the first capability is the analytics aggregation capability, the requirement of the first network element on the level corresponding to the first capability is a requirement of the first network element for one or more of the following supported by the data analytics network element: a supported service area and a supported analytics ID. If an analytics aggregation capability supported by a data analytics network element meets a requirement of the first network element on a level of the analytics aggregation capability, it indicates that the data analytics network element supports a service area required by the first network element, and/or supports an analytics ID required by the first network element. If an analytics aggregation capability supported by a data analytics network element does not meet the requirement of the first network element on the level of the analytics aggregation capability, it indicates that the data analytics network element does not support the service area required by the first network element, and/or does not support the analytics ID required by the first network element.

If the first capability is the analytics metadata provisioning capability, the requirement of the first network element on the level corresponding to the first capability is a requirement of the first network element for a metadata category supported by the data analytics network element. If an analytics metadata provisioning capability supported by a data analytics network element meets a requirement of the first network element on a level of the analytics metadata provisioning capability, it indicates that a metadata category supported by the data analytics network element includes a metadata category required by the first network element. If an analytics metadata provisioning capability supported by a data analytics network element does not meet the requirement of the first network element on the level of the analytics metadata provisioning capability, it indicates that the metadata category supported by the data analytics network element does not completely include the metadata category required by the first network element.

For more descriptions of the first network element receiving the first information from the source data analytics network element, refer to the following method 400. For brevity, details are not described herein.

In a possible implementation, the second network element is a target data analytics network element. The first information includes capability information of the target data analytics network element or third indication information. The capability information of the target data analytics network element or the third indication information is used to determine whether the target data analytics network element supports the first capability. The at least one first data analytics network element includes the target data analytics network element.

For the capability information of the target data analytics network element, refer to the foregoing descriptions of the capability information of the first data analytics network element #1.

The third indication information indicates to terminate a first service corresponding to the first capability. It should be understood that, when the third indication information indicates to terminate the first service, it is equivalent to that the third indication information is used to determine that the target data analytics network element does not support the first capability, or is used to determine that the target data analytics network element cannot provide the first service. For more descriptions of receiving, by the first network element, the first information from the target data analytics network element, refer to the following method 500. For brevity, details are not described herein.

S220: The first network element determines, based on the first information, whether to subscribe to the analytics service #1 from at least one second data analytics network element.

The second data analytics network element is the same as or different from the first data analytics network element.

In a possible implementation, if the first information is used to determine that the at least one first data analytics network element does not support the first capability, or the first information is used to determine that the one or more first data analytics network elements in the at least one first data analytics network element support the first capability, but a level corresponding to the first capability supported by the one or more first data analytics network elements cannot meet the requirement of the first network element on the level corresponding to the first capability, the first network element determines, based on the first information, not to subscribe to the analytics service #1 from the at least one first second data analytics network element.

For example, when the first data analytics network element is different from the second data analytics network element, the at least one first data analytics network element may be the target data analytics network element selected by the source data analytics network element, and the at least one second data analytics network element may be the source data analytics network element. In other words, when the target data analytics network element selected by the source data analytics network element does not support the first capability, the first network element determines not to no longer subscribe to an analytics service from the source data analytics network element. When the first network element no longer subscribes to the analytics service from the source data analytics network element, the first network element may be triggered to discover a new data analytics network element from the network repository function network element. This helps the first network element discover, from the network repository function network element, a data analytics network element that supports the first capability.

Optionally, when the analytics service #1 corresponds to the first analytics identifier, the first network element determines, based on the first information, that the at least one first data analytics network element does not support the first capability for the first analytics identifier, or the first network element determines, based on the first information, that the one or more first data analytics network elements in the at least one first data analytics network element support the first capability for the first analytics identifier, but a level corresponding to the first capability supported by the one or more first data analytics network elements for the first analytics identifier cannot meet the requirement of the first network element on the level corresponding to the first capability. In this case, the first network element determines not to subscribe to the analytics service #1 from the at least one second data analytics network element.

It may be understood that, when the at least one first data analytics network element does not support the first capability, the first network element does not subscribe to the analytics service #1 from the at least one second data analytics network element, so that the first network element can be prevented from receiving an inaccurate analytics result, and adverse impact that may be caused by executing a first decision by the first network element based on the inaccurate analytics result can be avoided.

Optionally, when the first network element does not subscribe to the analytics service #1 from the at least one second data analytics network element, the method 200 further includes: The first network element sends a first request (the first request may alternatively be replaced with a first subscription) to the source data analytics network element or the target data analytics network element. The first request includes fourth indication information. The fourth indication information indicates subscription suspending of the analytics service #1, or the fourth indication information indicates to terminate the analytics service #1. The at least one second data analytics network element includes the target data analytics network element.

It may be understood that, if the first request sent by the first network element to the source data analytics network element includes the fourth indication information, the source data analytics network element may suspend or terminate, based on the fourth indication information, obtaining of an analytics result #1 corresponding to the analytics service #1, and/or indicate the target data analytics network element to suspend or terminate obtaining of the analytics result #1 corresponding to the analytics service #1, to reduce resource consumption of the source data analytics network element and/or the target data analytics network element.

Optionally, the first request further includes fifth indication information, and the fifth indication information indicates a cause value for subscription suspending or unsubscribing of the analytics service #1. For example, the fifth indication information indicates that the at least one first data analytics network element does not support the first capability, or the fifth indication information indicates that the at least one first data analytics network element cannot provide the first service corresponding to the first capability, or the fifth indication information indicates that the level corresponding to the first capability supported by the at least one first data analytics network element does not meet the requirement of the first network element on the level corresponding to the first capability.

In a possible implementation, if the first information is used to determine that the at least one first data analytics network element does not support the first capability, or the first information is used to determine that one or more first data analytics network elements in the at least one first data analytics network element support the first capability, but the level corresponding to the first capability supported by the one or more first data analytics network elements cannot meet a requirement of the first network element on the level corresponding to the first capability, the first network element determines, based on the first information, to subscribe to the analytics service #1 from the at least one second data analytics network element. The second data analytics network element is different from the first data analytics network element. The second data analytics network element supports the first capability, or a level corresponding to the first capability supported by the second data analytics network element meets the requirement of the first network element on the level corresponding to the first capability.

In a possible implementation, the first network element determines, based on the first information, to subscribe to the analytics service #1 from the at least one second data analytics network element. The second data analytics network element is a first data analytics network element that is in the at least one first data analytics network element and that supports the first capability. Alternatively, the second data analytics network element is a first data analytics network element that supports the first capability in the at least one first data analytics network element, where a level corresponding to the first capability supported by the first data analytics network element meets the requirement of the first network element on the level corresponding to the first capability. Optionally, when the analytics service #1 corresponds to the first analytics identifier, the second data analytics network element is a first data analytics network element that is in the at least one first data analytics network element and that supports the first capability for the first analytics identifier. Alternatively, the second data analytics network element is a first data analytics network element that is in the at least one first data analytics network element and that supports the first capability for the first analytics identifier, where a level corresponding to the first capability supported by the first data analytics network element meets the requirement of the first network element on the level corresponding to the first capability.

It should be noted that, because the second data analytics network element supports the first capability, the analytics service #1 subscribed to by the first network element from the second data analytics network element includes the first service. For example, when the first service includes providing the analytics accuracy information, that the first network element subscribes to the analytics service #1 from the second data analytics network element means that the first network element subscribes to the analytics result #1 corresponding to the first analytics identifier, and subscribes to the analytics accuracy information obtained by the first data analytics network element by performing accuracy checking on the first analytics identifier. The first analytics identifier corresponds to the analytics service #1.

It may be understood that, when the first network element determines to subscribe to the analytics service #1 from the second data analytics network element, the first network element may send a subscription request message to the second data analytics network element, where the subscription request message is used to subscribe to the analytics service #1. For example, the first network element sends the subscription request message to the first data analytics network element by invoking an Nnwdaf_AnalyticsSubscription_Subscribe (Nnwdaf_AnalyticsSubscription_Subscribe) service.

Optionally, after the first network element subscribes to the analytics service #1 from the at least one second data analytics network element, the method 200 further includes: The first network element receives the analytics result #1 and service information from the at least one second data analytics network element, where the analytics result #1 corresponds to the analytics service #1, and the service information corresponds to the first service; and the first network element executes the first decision based on the analytics result #1, where when the service information indicates that the analytics result #1 does not meet the requirement of the first network element on the level corresponding to the first capability, a proportion of the analytics result #1 in a factor for executing the first decision by the first network element does not exceed a threshold. For example, the threshold is a proportion of an analytics result that meets the requirement of the first network element on the level corresponding to the first capability in the factor for executing the first decision by the first network element. The first service includes providing the analytics accuracy information, and the service information includes the analytics accuracy information. The first service includes providing the aggregation analytics, and the service information includes information related to the aggregation analytics. If the first service includes providing the analytics metadata information, the service information includes providing the analytics metadata information.

It may be understood that, when the analytics result #1 does not meet the requirement of the first network element on the level corresponding to the first capability, accuracy of the analytics result #1 may not meet a requirement on accuracy of the analytics result when the first network element executes the first decision. Therefore, the first network element decreases the proportion of the analytics result #1 in the factor for executing the first decision by the first network element, to avoid adverse impact that may be caused by executing the first decision by the first network element based on the analytics result #1. For example, the analytics result #1 is an analytics result for a location of UE. When the accuracy of the analytics result #1 is insufficient, if an AMF (an example of the first network element) performs paging completely based on the analytics result #1, the paging is quite likely to fail, causing a waste of signaling. If the AMF decreases a proportion of the analytics result #1 in the factor for performing the paging, the AMF may not perform the paging completely based on the analytics result #1. For example, a paging range determined by the AMF is larger than that in the analytics result #1, to increase a paging success probability.

Optionally, when the analytics result #1 received by the first network element from the at least one second data analytics network element does not meet the requirement of the first network element on the level corresponding to the first capability, the method 200 further includes: The first network element sends sixth indication information to the at least one second data analytics network element, where the sixth indication information indicates unsubscribing of the first service corresponding to the first capability, or the sixth indication information indicates subscription suspending of the first service corresponding to the first capability.

It should be noted that, when the first network element unsubscribes to or pauses subscription to the first service, the first network element may still subscribe to the analytics service #1 from the at least one second data analytics network element, but the analytics service #1 subscribed to by the first network element does not include the first service. Correspondingly, the at least one second data analytics network element provides the analytics result #1 for the first network element based on the subscription of the first network element, but does not provide the service information corresponding to the first service.

It should be understood that, after a period of time, the second data analytics network element may meet the requirement of the first network element on the level corresponding to the first capability again, and the first network element may re-subscribe to the first service.

In a possible implementation, the first network element determines, based on the first information, that the one or more first data analytics network elements in the at least one first data analytics network element support the first capability, but the level corresponding to the first capability supported by the one or more first data analytics network elements does not meet the requirement of the first network element on the level corresponding to the first capability, and the first network element subscribes to the analytics service #1 from the at least one second data analytics network element. The second data analytics network element is a first data analytics network element that supports the first capability in the at least one first data analytics network element.

Optionally, after the first network element subscribes to the analytics service #1 from the at least one second data analytics network element, the method 200 further includes: The first network element receives the analytics result #1 from the at least one second data analytics network element, where the analytics result #1 corresponds to the analytics service #1; and the first network element executes the first decision based on the analytics result #1, where the proportion of the analytics result #1 in the factor for executing the first decision by the first network element does not exceed the threshold.

It may be understood that, because the level corresponding to the first capability supported by the at least one second data analytics network element does not meet the requirement of the first network element on the level corresponding to the first capability, the analytics result #1 received by the first network element from the at least one second data analytics network element does not meet the requirement of the first network element on the level corresponding to the first capability. In this case, the accuracy of the analytics result #1 may not meet the requirement on the accuracy of the analytics result when the first network element executes the first decision. Therefore, the first network element decreases the proportion of the analytics result #1 in the factor for executing the first decision by the first network element, to avoid adverse impact that may be caused by executing the first decision by the first network element based on the analytics result #1. Optionally, the method 200 further includes: The first network element sends sixth indication information to the at least one second data analytics network element, where the sixth indication information indicates unsubscribing of the first service corresponding to the first capability, or the sixth indication information indicates to suspend a subscription to the first service corresponding to the first capability.

It should be noted that, when the first network element unsubscribes to or suspends the subscription to the first service, the first network element may still subscribe to the analytics service #1 from the at least one second data analytics network element, but the analytics service #1 subscribed to by the first network element does not include the first service. Correspondingly, the at least one second data analytics network element provides the analytics result #1 for the first network element based on the subscription of the first network element, but does not provide the service information corresponding to the first service.

In this embodiment of this application, after receiving the first information from the second network element, the first network element can determine, based on the first information, whether the at least one first data analytics network element supports the first capability, and then the first network element can determine, based on a capability of the at least one first data analytics network element, whether to subscribe to the analytics service from the at least one second data analytics network element. This avoids adverse impact caused by subscribing to the analytics service by the first network element from the first data analytics network element that does not support the first capability. For example, if the first network element subscribes to the analytics service from the first data analytics network element that does not support the first capability, an analytics result received by the first network element from the first data analytics network element that does not support the first capability may not be an analytics result required by the first network element. In this case, adverse impact may be caused by executing the first decision by the first network element based on the analytics result.

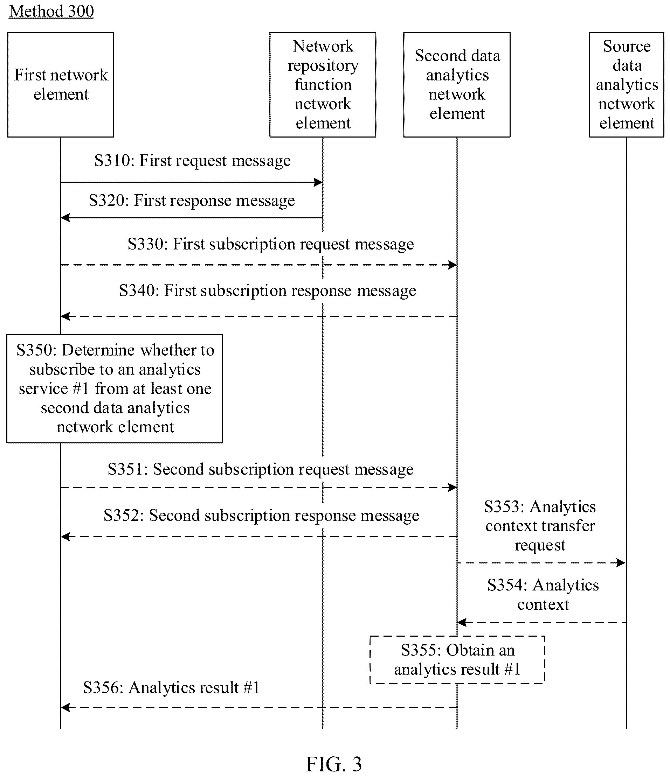

Based on the method shown in FIG. 2, with reference to FIG. 3, the following describes the method provided in this embodiment of this application by using an example in which the second network element is a network repository function network element.

FIG. 3 shows a schematic flowchart of a communication method 300 according to an embodiment of this application. The following describes in detail steps included in the method 300.

S310: A first network element sends a first request message to a network repository function network element.

Correspondingly, the network repository function network element receives the first request message from the first network element.

The first request message is used to request information about at least one data analytics network element. The information about the at least one data analytics network element may include one or more of the following: an identifier of each data analytics network element in the at least one data analytics network element, an analytics service range (also referred to as a service area) of each data analytics network element in the at least one data analytics network element, an analytics identifier supported by each data analytics network element in the at least one data analytics network element, or capability information of each data analytics network element in the at least one data analytics network element.

The analytics service range of the data analytics network element may include one or more of the following: a network range for collecting network data, namely, a data collection range; a network range related to an output analytics result, namely, a data analytics range; and a range of an analytics filtering parameter corresponding to the analytics identifier supported by the data analytics network element. The analytics filtering parameter corresponding to the analytics identifier may be some parameter types or values that can be used to select an analytics result corresponding to the analytics identifier. A part of subsets of all analytics results corresponding to analytics identifiers that can be provided by the data analytics network element may be filtered out by using analytics filtering parameters corresponding to the analytics identifiers.

The analytics identifier supported by the data analytics network element is an analytics identifier corresponding to an analytics service provided by the data analytics network element.

For the capability information of the data analytics network element, refer to the descriptions of the capability information of the first data analytics network element #1 in S210 in the foregoing method 200.

Optionally, the first request message includes a first analytics identifier, and the first request message is used to request information about at least one data analytics network element that supports the first analytics identifier.

Optionally, the first request message includes information about a first capability, and the first request message is used to request information about at least one data analytics network element that supports the first capability.

The first capability may include one or more of the following: an accuracy checking capability, an analytics aggregation capability, or an analytics metadata provisioning capability. For more descriptions of the first capability, refer to the descriptions in S210 of the method 200. The information about the first capability may include a name of the first capability and/or an identifier corresponding to the first capability.

It should be understood that, when the first request message includes the first analytics identifier and the information about the first capability, the first request message is used to request information about at least one data analytics network element that supports the first capability for the first analytics identifier.

Optionally, the first request message includes a variant analytics identifier of the first analytics identifier, the variant analytics identifier corresponds to the first capability, and the first request message is used to request information about at least one data analytics network element that supports the first capability for the first analytics identifier. For more descriptions of the variant analytics identifier of the first analytics identifier, refer to S210 in the foregoing method 200. Optionally, the first request message includes a network element type of a target network element (NF type of target NF), and the network element type of the target network element is a type of a network element requested by the first request message, that is, the network element type of the target network element indicates a data analytics network element.

For example, the first network element may send the first request message to the network repository function network element by invoking an Nnrf_NFDiscovery_Request (Nnrf_NFDiscovery_Request) service.

S320: The network repository function network element sends a first response message to the first network element.

Correspondingly, the first network element receives the first response message from the network repository function network element.

The first response message includes one or more of the following: first information, an identifier of at least one first data analytics network element, an analytics service range of the at least one first data analytics network element, or an analytics identifier supported by the at least one first data analytics network element.

The first information includes capability information of the at least one first data analytics network element or first indication information, and the capability information of the at least one first data analytics network element or the first indication information is used to determine whether the at least one first data analytics network element supports the first capability. For more descriptions of the capability information of the at least one first data analytics network element and the first indication information, refer to S210 in the foregoing method 200.

It should be understood that if each first data analytics network element in the at least one first data analytics network element does not support the first capability, the first information may include the first indication information or the capability information of the at least one first data analytics network element. If one or more first data analytics network elements in the at least one first data analytics network element support the first capability, the first information may include the capability information of the at least one first data analytics network element.

It should be understood that, if the at least one first data analytics network element includes a data analytics network element that supports providing an analytics service for the first network element, and an identifier, an analytics service range, or a supported analytics identifier of the data analytics network element that provides the analytics service for the first network element is preconfigured on the first network element, the first response message may not include the identifier, the analytics service range, or the supported analytics identifier of the at least one first data analytics network element.

The at least one first data analytics network element is not limited in this embodiment of this application.

For example, the at least one first data analytics network element includes all data analytics network elements registered with the network repository function network element, or the at least one first data analytics network element includes a data analytics network element that is in all data analytics network elements registered with the network repository function network element and that supports providing an analytics service for the first network element. For ease of description, all the data analytics network elements registered with the network repository function network element are denoted as a data analytics network element set #1 below, and a data analytics network element that is in the data analytics network element set #1 and that supports providing an analytics service for the first network element is denoted as a data analytics network element set #2 below.

For example, when the first request message includes the first analytics identifier, the at least one first data analytics network element may include a network element that supports the first analytics identifier.

For example, when the first request message includes the information about the first capability, the at least one first data analytics network element may include a network element that supports the first capability. Optionally, if each data analytics network element in the data analytics network element set #1 does not support the first capability, the at least one first data analytics network element may include one or more data analytics network elements in the data analytics network element set #1. Alternatively, if each data analytics network element in the data analytics network element set #2 does not support the first capability, the at least one first data analytics network element may include one or more data analytics network elements in the data analytics network element set #2.

For example, when the first request message includes the first analytics identifier and the information about the first capability, or when the first request message includes the variant analytics identifier of the first analytics identifier, the at least one first data analytics network element may include a data analytics network element that supports the first capability for the first analytics identifier. Optionally, if each data analytics network element in the data analytics network element set #1 does not support the first capability, the at least one first data analytics network element may include one or more data analytics network elements that are in the data analytics network element set #1 and that support the first analytics identifier. Alternatively, if each data analytics network element in the data analytics network element set #2 does not support the first capability, the at least one first data analytics network element may include one or more data analytics network elements that are in the data analytics network element set #2 and that support the first analytics identifier.

As described above, the first network element may send the first request message to the network repository function network element by invoking the Nnrf_NFDiscovery_Request service. Correspondingly, the network repository function network element may send the first response message to the first network element by invoking an Nnrf_NFDiscovery_RequestResponse (Nnrf_NFDiscovery_RequestResponse) service.

Optionally, after receiving the first request message from the first network element, the network repository function network element may authorize the first request message. For example, the network repository function network element determines, based on an NF requested by the first request message or a configuration file of an NF service, and a type of the first network element, whether the first network element is allowed to discover the NF requested by the first request message. If the network repository function network element determines that the first network element is allowed to discover the NF requested by the first request message, the network repository function network element sends the first response message to the first network element. Optionally, if the first response message does not include the first information, or the first response message includes the first information, and the first information includes the capability information of the at least one first data analytics network element, but the capability information of the at least one first data analytics network element does not include information about a level corresponding to the first capability supported by the at least one first data analytics network element, the method 300 may further include S330 and S340.

S330: The first network element sends a first subscription request message to the first data analytics network element.

Correspondingly, the first data analytics network element receives the first subscription request message from the first network element.

In S330, the first network element may send the first subscription request message to each first data analytics network element in the at least one first data analytics network element.

The first subscription request message is used to subscribe to a first service corresponding to the first capability. For more descriptions of the first service, refer to that in S210 in the foregoing method 200.

Optionally, the first subscription request message includes the first analytics identifier, and the first subscription request message is used to subscribe, for the first analytics identifier, to the first service corresponding to the first capability.

S340: The first data analytics network element sends a first subscription response message to the first network element.

Correspondingly, the first network element receives the first subscription response message from the first data analytics network element.

The first subscription response message includes service information corresponding to the first service. The first service includes providing analytics accuracy information, and the service information includes the analytics accuracy information. The first service includes providing aggregation analytics, and the service information includes information related to the aggregation analytics. If the first service includes providing analytics metadata information, the service information includes providing the analytics metadata information.

If the first subscription request message includes the first analytics identifier, the first subscription response message includes the service information that corresponds to the first service and that is provided by the first data analytics network element for the first analytics identifier. For example, the first service includes providing the analytics accuracy information. The service information that corresponds to the first service and that is provided by the first data analytics network element for the first analytics identifier includes analytics accuracy information provided by the first data analytics network element for the first analytics identifier. The analytics accuracy information provided by the first data analytics network element for the first analytics identifier includes an accuracy checking result (namely, a level corresponding to an accuracy checking capability supported by the first data analytics for the first analytics identifier) obtained by the first data analytics network element by performing accuracy checking on the first analytics identifier.

It should be understood that, if the first data analytics network element does not support the first capability, the first data analytics network element cannot provide the first service. Further, the first data analytics network element sends the first subscription response message to the first network element to indicate that the first data analytics network element does not support the first capability.

It may be understood that, after receiving the first subscription response message, the first network element can determine, based on the first subscription response message, that the first data analytics network element does not support the first capability, or determine, based on the first subscription response message, a level corresponding to the first capability supported by the first data analytics network element.

S350: The first network element determines whether to subscribe to an analytics service #1 from at least one second data analytics network element.

In a possible implementation, if the first response message includes the first information, the first network element can determine, based on the first information, whether to subscribe to the analytics service #1 from the at least one second data analytics network element. For a manner in which the first network element determines, based on the first information, whether to subscribe to the analytics service #1 from the at least one second data analytics network element, refer to S220 in the method 200.

In a possible implementation, if the first response message does not include the first information, and S330 and S340 are performed in the method 300, the first network element determines, based on the first subscription response message, whether to subscribe to the analytics service #1 from the at least one second data analytics network element.

For example, if the first network element determines, based on at least one first subscription response message received from the at least one first data analytics network element, that the at least one first data analytics network element does not support the first capability, the first network element does not subscribe to the analytics service #1 from the at least one second data analytics network element. The at least one second data analytics network element is equivalent to the at least one first data analytics network element.

For example, if the first network element determines, based on the at least one first subscription response message received from the at least one first data analytics network element, that one or more first data analytics network elements in the at least one first data analytics network element support the first capability, the first network element subscribes to the analytics service #1 from the at least one second data analytics network element. The second data analytics network element is a first data analytics network element that supports the first capability in the at least one first data analytics network element, where a level corresponding to the first capability supported by the first data analytics network element meets a requirement of the first network element on a level corresponding to the first capability.

For example, if the first network element determines, based on the at least one first subscription response message received from the at least one first data analytics network element, that the one or more first data analytics network elements in the at least one first data analytics network element support the first capability, but a requirement on a level corresponding to the first capability supported by the one or more first data analytics network elements does not meet the requirement of the first network element on the level corresponding to the first capability, the first network element subscribes to the analytics service #1 from the at least one second data analytics network element. The second data analytics network element is a first data analytics network element that supports the first capability in the at least one first data analytics network element.

In a possible implementation, if the first response message includes the first information, and S330 and S340 are performed in the method 300, the first network element determines, based on the first information and the first subscription response message, whether to subscribe to the analytics service #1 from the at least one second data analytics network element.

For example, if the first network element determines, based on the first information and the at least one first subscription response message received from the at least one first data analytics network element, that one or more first data analytics network elements in the at least one first data analytics network element support the first capability, the first network element subscribes to the analytics service #1 from the at least one second data analytics network element. The second data analytics network element is a first data analytics network element that supports the first capability in the at least one first data analytics network element, where a level corresponding to the first capability supported by the first data analytics network element meets a requirement of the first network element on a level corresponding to the first capability.

For example, if the first network element determines, based on the first information and the at least one first subscription response message received from the at least one first data analytics network element, that the one or more first data analytics network elements in the at least one first data analytics network element support the first capability, but a requirement on a level corresponding to the first capability supported by the one or more first data analytics network elements does not meet the requirement of the first network element on the level corresponding to the first capability, the first network element subscribes to the analytics service #1 from the at least one second data analytics network element. The second data analytics network element is a first data analytics network element that supports the first capability in the at least one first data analytics network element.

Optionally, if the first network element determines that the at least one first data analytics network element does not support the first capability, the first network element may continue to perform S310 and S320, or continue to perform S310 to S340 until the first network element discovers, from the network repository function network element, a second data analytics network element that supports the first capability, and the first network element subscribes to the analytics service #1 from the second data analytics network element that supports the first capability. Alternatively, if the first network element determines that the level corresponding to the first capability supported by the at least one first data analytics network element does not meet the requirement of the first network element on the level corresponding to the first capability, the first network element may continue to perform S310 and S320, or continue to perform S310 to S340 until the first network element discovers, from the network repository function network element, a second data analytics network element that supports the first capability, and a level corresponding to the first capability supported by the second data analytics network element meets the requirement of the first network element on the level corresponding to the first capability. Further, the first network element subscribes to the analytics service #1 from the second data analytics network element. Optionally, if the first network element determines to subscribe to the analytics service #1 from the at least one second data analytics network element, the method 300 further includes one or more steps in S351 to S356.

S351: The first network element sends a second subscription request message to the second data analytics network element.

Correspondingly, the second data analytics network element receives the second subscription request message from the first network element.

If the first network element subscribes to the analytics service #1 from a plurality of second data analytics network elements, in S351, the first network element sends a second subscription request message to each second data analytics network element in the plurality of second data analytics network elements.

The second subscription request message is used to request to subscribe to the analytics service #1, and the second subscription request message includes the first analytics identifier corresponding to the analytics service #1. The analytics service #1 that the first network element requests to subscribe to includes the first service, or does not include the first service. For example, if the first network element determines that the second data analytics network element supports the first capability, or the first network element determines that the second data analytics network element supports the first capability, and the level corresponding to the first capability supported by the second data analytics network element meets the requirement of the first network element on the level corresponding to the first capability, the analytics service #1 that the first network element requests to subscribe to includes the first service. For another example, if the first network element determines that the second data analytics network element supports the first capability, but the level corresponding to the first capability supported by the second data analytics network element does not meet the requirement of the first network element on the level corresponding to the first capability, the analytics service #1 that the first network element requests to subscribe to may not include the first service.

Optionally, if the analytics service #1 subscribed to by the first network element includes the first service, the second subscription request message may include the first analytics identifier and the information about the first capability, or the second subscription request message includes the variant analytics identifier of the first analytics identifier.

Optionally, if the first network element has subscribed to the analytics service #1 from a source data analytics network element before subscribing to the analytics service #1 from the second data analytics network element, the second subscription request message may further include an identifier of the source data analytics network element. In this case, the second data analytics network element may also be referred to as a target data analytics network element.

Optionally, if the first network element has subscribed to the analytics service #1 from the source data analytics network element before subscribing to the analytics service #1 from the second data analytics network element, and the analytics service #1 subscribed to by the first network element from the source data analytics network element includes the first service, when the analytics service #1 subscribed to by the first network element from the second data analytics network element does not include the first service, the second subscription request message may include sixth indication information, where the sixth indication information indicates to unsubscribe or pause subscription to the first service.

It should be understood that, when the first network element unsubscribes to or pauses subscription to the first service from the second data analytics network element, the first network element may still subscribe to the analytics service #1 from the second data analytics network element, but the analytics service #1 subscribed to by the first network element does not include the first service. In other words, the first network element subscribes to, from the second data analytics network element, an analytics result #1 corresponding to the first analytics identifier, but does not subscribe to the service information corresponding to the first service.

For example, the first network element sends the second subscription request message to the first data analytics network element by invoking an Nnwdaf_AnalyticsSubscription_Subscribe service. S352: The second data analytics network element sends a second subscription response message to the first network element.

Correspondingly, the first network element receives the second subscription response message from the second data analytics network element.

For example, the second data analytics network element sends the second subscription response message to the first network element by invoking the Nnwdaf_AnalyticsSubscription_Response (Nnwdaf_AnalyticsSubscription_Response) service.

Optionally, when the second subscription request message includes the identifier of the source data analytics network element, the method 300 further includes S353 and S354.

S353: The second data analytics network element sends an analytics context transfer request (analytics context transfer request) to the source data analytics network element.

Correspondingly, the source data analytics network element receives the analytics context transfer request from the second data analytics network element.

The second data analytics network element sends the analytics context transfer request to the source data analytics network element based on the identifier of the source data analytics network element. The analytics context transfer request includes the first analytics identifier for requesting an analytics context associated with the analytics service #1.

Optionally, if the second subscription request message includes the sixth indication information, the analytics context transfer request includes eighth indication information, where the eighth indication information indicates to unsubscribe or pause subscription to the first service.

For example, the first data analytics network element sends the analytics context transfer request to the source data analytics network element by invoking an Nnwdaf_Analyticsinfo_ContextTransfer (Nnwdaf_Analyticsinfo_ContextTransfer) service. S354: The source data analytics network element sends the analytics context to the second data analytics network element.

Correspondingly, the second data analytics network element receives the analytics context from the source data analytics network element.

For example, when the analytics context transfer request does not include the eighth indication information, the source data analytics network element sends a first analytics context related to the analytics service #1 to the second data analytics network element, where the first analytics context includes a context related to the first service. The first analytics context further includes a context corresponding to the first analytics identifier.

The first service includes providing the analytics accuracy information. The context related to the first service may include one or more of the following: an accuracy value of the first analytics identifier, an indication that indicates whether the accuracy value of the first analytics identifier meets a first accuracy level, updated analytics related information (if an "updated analytics flag" parameter is included in a corresponding subscription, the data analytics network element provides updated analytics for a provided analytics ID or provided analytics IDs, where the analytics is generated within an analytics accuracy information time window), an analytics stop indication (the data analytics network element provides, for a consumer based on internal logic of the data analytics network element or a specified accuracy deviation threshold, an indication that indicates to stop using an analytics ID related to a subscription ID), or an analytics resuming indication (an indication that indicates to resume a previously suspended subscription to the analytics ID or the analytics IDs). The first service includes providing aggregation analytics. The context related to the first service may include one or more of the following: analytics subscription aggregation information (analytics subscription aggregation information) (information about analytics subscriptions that the source data analytics network element has with other data analytics network elements, where these subscriptions collectively serve a transferred analytics subscription that includes IDs and analytics metadata information of these data analytics network elements for a specific analytics ID or specific analytics IDs and optionally input parameters of analytics exposure), and aggregation related information (aggregation related information) (information related to analytics consumers that aggregate analytics from subscriptions of a plurality of data analytics network elements, for example, (a set of) data analytics network element identifiers of data analytics network element instances used by a data analytics network element service consumer when aggregating the plurality of analytics subscriptions). The first service includes providing analytics metadata information, and the context related to the first service may include one or more of the following: analytics subscription aggregation information.

The context corresponding to the first identifier may include one or more of the following: the first analytics identifier, the analytics result #1 corresponding to the first analytics identifier, network data for obtaining the analytics result #1, or network element entity information for providing the network data.

For example, when the analytics context transfer request includes the eighth indication information, the source data analytics network element sends a second analytics context related to the analytics service #1 to the second data analytics network element, where the second analytics context does not include the context related to the first service. The second analytics context includes the context corresponding to the first analytics identifier.

The method 300 further includes S355 and S356.

S355: The first data analytics network element obtains the analytics result #1.

S356: The first data analytics network element sends the analytics result #1 to the first network element.

Correspondingly, the first network element receives the analytics result #1 from the first data analytics network element.

Optionally, if the analytics service #1 subscribed to by the first network element from the first data analytics network element includes the first service, in S356, the first data analytics network element further sends the service information corresponding to the first service to the first network element.

For example, the first data analytics network element sends the analytics result #1 to the first network element by invoking an Nnwdaf_AnalyticsSubscription_Notify (Nnwdaf_AnalyticsSubscription_Notify) service.

Optionally, after receiving the analytics result #1, the first network element may execute a first decision based on the analytics result #1.

Optionally, if the level corresponding to the first capability supported by the second data analytics network element does not meet the requirement of the first network element on the level corresponding to the first capability, or the first network element determines, based on the received service information, that the analytics result #1 does not meet the requirement of the first network element on the level corresponding to the first capability, a proportion of the analytics result #1 in a factor for executing the first decision by the first network element does not exceed the threshold. In this embodiment of this application, the first network element may discover information about the at least one first data analytics network element from the network repository function network element, and/or subscribe to the first service from the at least one first data analytics network element, to determine whether the at least one first data analytics network element supports the first capability. When the first network element can determine whether the at least one first data analytics network element supports the first capability, adverse impact caused by subscribing to an analytics service by the first network element from a first data analytics network element that does not support the first capability can be avoided.

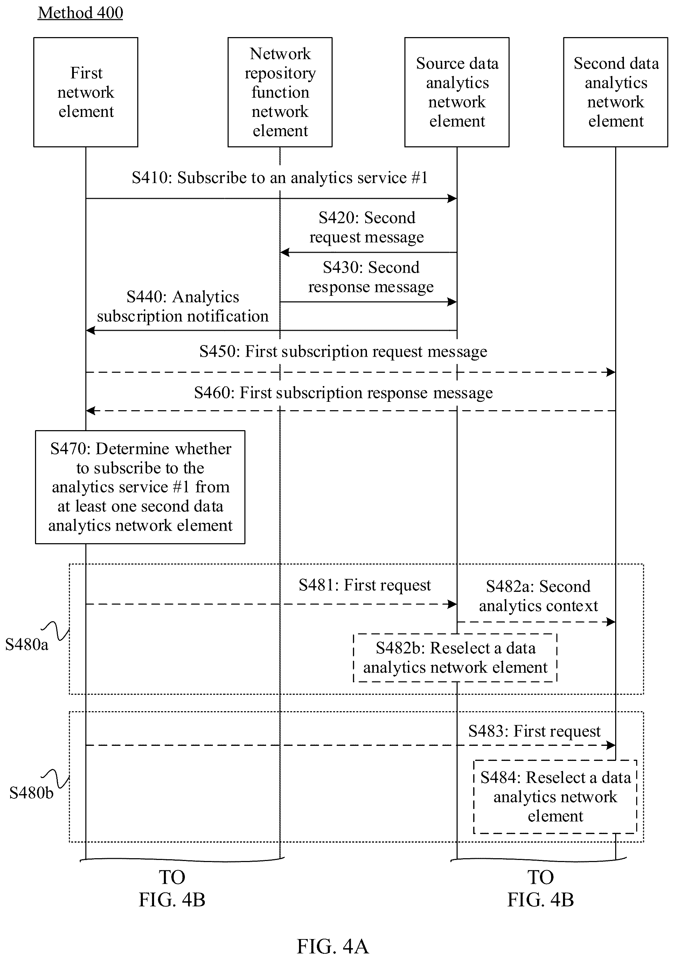

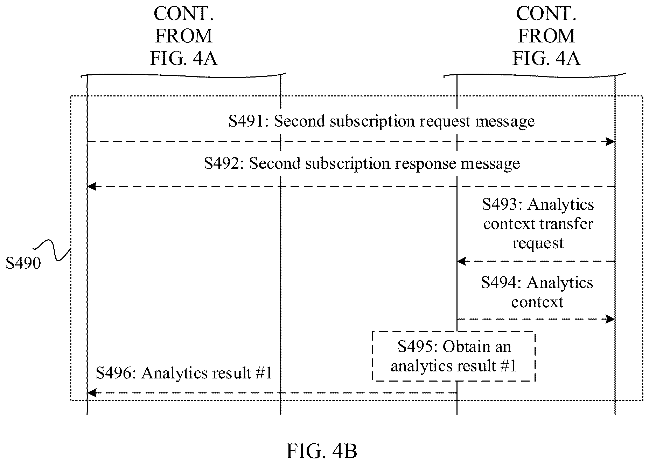

Based on the method shown in FIG. 2, with reference to FIG. 4A and FIG. 4B, the following describes the method provided in this embodiment of this application by using an example in which the second network element is the source data analytics network element.

FIG. 4A and FIG. 4B are a schematic flowchart of a communication method 400 according to an embodiment of this application. The following describes in detail steps included in the method 400.

S410: A first network element subscribes to an analytics service #1 from a source data analytics network element.

The analytics service #1 subscribed to by the first network element from the source data analytics network element includes a first service corresponding to a first capability. For more descriptions of the first capability and the first service, refer to S210 in the foregoing method 200.

S420: The source data analytics network element sends a second request message to a network repository function network element.

Correspondingly, the network repository function network element receives the second request message from the source data analytics network element.

It should be noted that, if the source data analytics network element determines that the source data analytics network element cannot provide the analytics service #1 for the first network element, or the source data analytics network element determines that the source data analytics network element cannot provide the analytics service #1 for the first network element shortly, the source data analytics network element sends the second request message to the network repository function network element.

The second request message is used to request information about at least one data analytics network element. For more descriptions of the information about the at least one data analytics network element, refer to S310 in the foregoing method 300.

Optionally, the second request message includes a first analytics identifier, and the second request message is used to request information about at least one data analytics network element that supports the first analytics identifier.

Optionally, the second request message includes information about the first capability, and the second request message is used to request information about at least one data analytics network element that supports the first capability. The information about the first capability may include a name of the first capability and/or an identifier corresponding to the first capability.

It should be understood that, when the second request message includes the first analytics identifier and the information about the first capability, the second request message is used to request information about at least one data analytics network element that supports the first capability for the first analytics identifier.

Optionally, the second request message includes a variant analytics identifier of the first analytics identifier, the variant analytics identifier corresponds to the first capability, and the second request message is used to request information about at least one data analytics network element that supports the first capability for the first analytics identifier. For more descriptions of the variant analytics identifier of the first analytics identifier, refer to S210 in the foregoing method 200.

Optionally, the second request message includes a network element type of a target network element, and the network element type of the target network element is a type of a network element requested by the second request message, that is, the network element type of the target network element indicates a data analytics network element.

For example, the source data analytics network element may send the second request message to the network repository function network element by invoking an Nnrf_NFDiscovery_Request service.

S430: The network repository function network element sends a second response message to the source data analytics network element.

Correspondingly, the source data analytics network element receives the second response message from the network repository function network element.

The second response message includes information about at least one third data analytics network element. For descriptions of the information about the at least one third data analytics network element, refer to the descriptions of the information about the at least one data analytics network element in S310 in the method 300.

The at least one third data analytics network element is not limited in this embodiment of this application.

For example, the at least one third data analytics network element includes all data analytics network elements registered with the network repository function network element, or the at least one third data analytics network element includes a data analytics network element that is in all data analytics network elements registered with the network repository function network element and that can be discovered by the source data analytics network element. For ease of description, all the data analytics network elements registered with the network repository function network element are denoted as a data analytics network element set #1 below, and a data analytics network element that is in the data analytics network element set #1 and that can be discovered by the source data analytics network element is denoted as a data analytics network element set #3 below. For example, when the second request message includes the first analytics identifier, the at least one third data analytics network element may include a network element that supports the first analytics identifier.

For example, when the second request message includes the information about the first capability, the at least one third data analytics network element may include a network element that supports the first capability. Optionally, if each data analytics network element in the data analytics network element set #1 does not support the first capability, the at least one third data analytics network element may include one or more data analytics network elements in the data analytics network element set #1. Alternatively, if each data analytics network element in the data analytics network element set #3 does not support the first capability, the at least one third data analytics network element may include one or more data analytics network elements in the data analytics network element set #3.

For example, when the second request message includes the first analytics identifier and the information about the first capability, or when the second request message includes the variant analytics identifier of the first analytics identifier, the at least one third data analytics network element may include a data analytics network element that supports the first capability for the first analytics identifier. Optionally, if each data analytics network element in the data analytics network element set #1 does not support the first capability, the at least one third data analytics network element may include one or more data analytics network elements that are in the data analytics network element set #1 and that support the first analytics identifier. Alternatively, if each data analytics network element in the data analytics network element set #3 does not support the first capability, the at least one third data analytics network element may include one or more data analytics network elements that are in the data analytics network element set #2 and that support the first analytics identifier.

As described above, the source data analytics network element may send the second request message to the network repository function network element by invoking the Nnrf_NFDiscovery_Request service. Correspondingly, the network repository function network element may send the second response message to the source data analytics network element by invoking an Nnrf_NFDiscovery _RequestResponse service.

Optionally, after receiving the second request message from the source data analytics network element, the network repository function network element may authorize the second request message. For example, the network repository function network element determines, based on an NF requested by the second request message or a configuration file of an NF service, and a type of the source data analytics network element, whether the source data analytics network element is allowed to discover the NF requested by the second request message. If the network repository function network element determines that the source data analytics network element is allowed to discover the NF requested by the second request message, the network repository function network element sends the second response message to the source data analytics network element.

S440: The source data analytics network element sends an analytics subscription notification to the first network element.

Correspondingly, the first network element receives the analytics subscription notification from the source data analytics network element.

The source data analytics network element sends the analytics subscription notification to the first network element based on the information about the at least one third data analytics network element. The analytics subscription notification includes one or more of the following: first information, an identifier of at least one first data analytics network element, an analytics service range of the at least one first data analytics network element, or an analytics identifier supported by the at least one first data analytics network element. The at least one third data analytics network element includes the at least one first data analytics network element. For example, the at least one first data analytics network element includes a third data analytics network element that is in the at least one third data analytics network element and that supports providing the analytics service #1 for the first network element. For another example, the at least one first data analytics network element includes a third data analytics network element that is in the at least one third data analytics network element and whose load is lower than a load threshold.

The first information includes capability information of the at least one first data analytics network element or second indication information, and the capability information of the at least one first data analytics network element or the second indication information is used to determine whether the at least one first data analytics network element supports the first capability. For more descriptions of the capability information of the at least one first data analytics network element and the second indication information, refer to S210 in the foregoing method 200.

It should be understood that, if the information about the at least one third data analytics network element includes capability information of the at least one third data analytics network element, and the source data analytics network element determines, based on the capability information of the at least one third data analytics network element, that each first data analytics network element in the at least one first data analytics network element does not support the first capability, the first information may include the second indication information or the capability information of the at least one first data analytics network element. If the information about the at least one third data analytics network element includes the capability information of the at least one third data analytics network element, the first information may include the capability information of the at least one first data analytics network element. If the information about the at least one third data analytics network element does not include the capability information of the at least one third data analytics network element, the first information may include the second indication information. It should be understood that, if the at least one first data analytics network element includes a data analytics network element that supports providing an analytics service for the first network element, and an identifier, an analytics service range, or a supported analytics identifier of the data analytics network element that provides the analytics service for the first network element is preconfigured on the first network element, the analytics service notification may not include the identifier, the analytics service range, or the supported analytics identifier of the at least one first data analytics network element.

For example, the source data analytics network element may send the analytics subscription notification to the first network element by invoking an Nnwdaf_AnalyticsSubscription_Notify service.

Optionally, if the analytics subscription notification does not include the first information, or the analytics subscription notification includes the first information, and the first information includes the capability information of the at least one first data analytics network element, but the capability information of the at least one first data analytics network element does not include information about a level corresponding to the first capability supported by the at least one first data analytics network element, the method 400 may further include S450 and S460.

S450: The first network element sends a second subscription request message to the first data analytics network element.

Correspondingly, the first data analytics network element receives the second subscription request message from the first network element.

For more descriptions of S450, refer to S330 in the foregoing method 300.

S460: The first data analytics network element sends a second subscription response message to the first network element.

Correspondingly, the first network element receives the second subscription response message from the first data analytics network element.

For more descriptions of S460, refer to S340 in the foregoing method 300.

S470: The first network element determines whether to subscribe to the analytics service #1 from the at least one first data analytics network element.

For more descriptions of S470, refer to S350 in the foregoing method 300.

Optionally, if the first network element determines that the at least one first data analytics network element does not support the first capability, or one or more first data analytics network elements in the at least one first data analytics network element support the first capability, but a level corresponding to the first capability supported by the one or more first data analytics network elements does not meet a requirement of the first network element on a level of the first capability, the method 400 further includes S480a or S480b.

S480a includes S481 and S482a, or S480a includes S481 and S482b.

S481: The first network element sends a first request to the source data analytics network element. Correspondingly, the source data analytics network element receives the first request from the first network element.

The first request includes fourth indication information, and the fourth indication information indicates to pause subscription to or unsubscribe the analytics service #1.

Optionally, the first request further includes fifth indication information, and the fifth indication information indicates a cause value for subscription suspending or unsubscribing of the analytics service #1. For example, the fifth indication information indicates that the at least one first data analytics network element does not support the first capability, or the fifth indication information indicates that the at least one first data analytics network element cannot provide the first service corresponding to the first capability, or the fifth indication information indicates that the level corresponding to the first capability supported by the at least one first data analytics network element does not meet the requirement of the first network element on the level corresponding to the first capability.

It should be understood that, after receiving the first request from the first network element, the source data analytics network element can determine, based on the fourth indication information included in the first request, or based on the fourth indication information and the fifth indication information included in the first request, that the at least one first data analytics network element cannot provide the first service required by the first network element. Further, the source data analytics network element may perform S482a or S482b.

S482a: The source data analytics network element sends a second analytics context to the second data analytics network element.

In S482a, the source data analytics network element sends an analytics context to each second data analytics network element in the at least one second data analytics network element. The at least one second data analytics network element includes one or more first data analytics network elements in the at least one first data analytics network element, and the at least one second data analytics network element may be referred to as a target data analytics network element.

The second analytics context corresponds to the analytics service #1, and the second analytics context does not include a context related to the first service. For descriptions of the context related to the first service, refer to S354 in the method 300. It should be understood that the second analytics context includes a context corresponding to the first analytics identifier, and a second analytics identifier corresponds to the analytics service #1.

It should be understood that, when the second analytics context does not include the context related to the first service, it indicates that the first network element still subscribes to the analytics service #1 from the second data analytics network element, but the subscribed analytics service #1 does not include the first service. In other words, the first network element still subscribes to, from the second data analytics network element, an analytics result #1 corresponding to the first analytics identifier, but does not subscribe to the service information corresponding to the first service.

It may be understood that, when the source data analytics network element sends the second analytics context to the second data analytics network element, a case in which the first service is subscribed to from the second data analytics network element when the second data analytics network element cannot provide the first service required by the first network element may be avoided, to reduce unnecessary signaling transmission.

S482b: The source data analytics network element reselects a data analytics network element.

For example, in S482b, the source data analytics network element sends a third request message to the network repository function network element, where the third request message is used to request the information about the at least one data analytics network element. For more descriptions of the third request message, refer to the foregoing descriptions of the second request message in S420.

Correspondingly, the network repository function network element sends a third response message to the source data analytics network element, where the third response message may include the information about the at least one data analytics network element.

Further, if the at least one data analytics network element includes a data analytics network element #1 that supports the first capability, the source data analytics network element may notify, by using an analytics subscription notification, the first network element of information about the data analytics network element #1 that supports the first capability, so that the first network element subscribes to the analytics service #1 from the data analytics network element #1. Alternatively, if the at least one data analytics network element includes a data analytics network element #2 that supports the first capability, and a level corresponding to the first capability supported by the data analytics network element #2 meets the requirement of the first network element on the level corresponding to the first capability, the source data analytics network element may notify the first network element of information about the data analytics network element #2 by using an analytics subscription notification, so that the first network element subscribes to the analytics service #1 from the data analytics network element #2.

Optionally, if the source data analytics network element sends prepared analytics subscription transfer (prepared analytics subscription transfer) to the second data analytics network element, when the source data analytics network element performs S482b, the source data analytics network element may further send prepared analytics subscription transfer cancel (prepared analytics subscription transfer cancel) to the second data analytics network element.

S480b includes S483 and S484.

S483: The first network element sends the first request to the second data analytics network element.

Correspondingly, the second data analytics network element receives the first request from the first network element.

In S483, the first network element sends the first request to each second data analytics network element in the at least one second data analytics network element. The at least one second data analytics network element includes one or more first data analytics network elements in the at least one first data analytics network element, and the at least one second data analytics network element may be referred to as a target data analytics network element.

The first request includes fourth indication information, and the fourth indication information indicates to pause subscription to or unsubscribe the analytics service #1.

S484: The second data analytics network element reselects a data analytics network element.

For example, in S484, the second data analytics network element sends a fourth request message to the network repository function network element, where the fourth request message is used to request the information about the at least one data analytics network element. For more descriptions of the fourth request message, refer to the foregoing descriptions of the second request message in S420.

Correspondingly, the network repository function network element sends a fourth response message to the source data analytics network element, where the fourth response message may include information about at least one fourth data analytics network element. For descriptions of the information about the at least one fourth data analytics network element, refer to the descriptions of the information about the at least one data analytics network element in S310 in the method 300.

Further, the first data analytics network element may send second information to the first network element based on the information about the at least one fourth data analytics network element. The second information includes capability information of at least one fifth data analytics network element or ninth indication information, and the capability information of the at least one fifth data analytics network element or the ninth indication information is used to determine whether the at least one fifth data analytics network element supports the first capability. The at least one fourth data analytics network element includes the at least one fifth data analytics network element. For descriptions of the capability information of the at least one fifth data analytics network element, refer to the descriptions of the capability information of the first data analytics network element #1 in S210 in the method 200. The ninth indication information indicates to terminate the first service corresponding to the first capability. For a manner in which the first data analytics network element sends the second information to the first network element based on the information about the at least one fourth data analytics network element, refer to the foregoing manner in which the source data analytics network element sends the first information to the first network element based on the information about the at least one third data analytics network element in S440.

It may be understood that S484 helps the first data analytics network element discover the fifth data analytics network element that supports the first capability, so that after the first data analytics network element sends the second information to the first network element, the first network element may subscribe, based on the second information, to the analytics service #1 from the fifth data analytics network element that supports the first capability.

Optionally, if the first network element determines to subscribe to the analytics service #1 from the at least one second data analytics network element, the method 400 further includes S490. S490 may include one or more steps in S491 to S496.

S491: The first network element sends a second subscription request message to the second data analytics network element.

Correspondingly, the second data analytics network element receives the second subscription request message from the first network element.

For more descriptions of S491, refer to S351 in the foregoing method 300.

S492: The second data analytics network element sends a second subscription response message to the first network element.

Correspondingly, the first network element receives the second subscription response message from the second data analytics network element.

Optionally, when the second subscription request message includes an identifier of the source data analytics network element, S490 further includes S493 and S494.

S493: The second data analytics network element sends an analytics context transfer request to the source data analytics network element.

Correspondingly, the source data analytics network element receives the analytics context transfer request from the second data analytics network element.

For more descriptions of S493, refer to S353 in the foregoing method 300.

S494: The source data analytics network element sends the analytics context to the second data analytics network element.

Correspondingly, the second data analytics network element receives the analytics context from the source data analytics network element.

For more descriptions of S494, refer to S354 in the foregoing method 300.

S490 further includes S495 and S496.

S495: The second data analytics network element obtains the analytics result #1.

S496: The second data analytics network element sends the analytics result #1 to the first network element.

Correspondingly, the first network element receives the analytics result #1 from the second data analytics network element.

For more descriptions of S496, refer to S356 in the foregoing method 300.

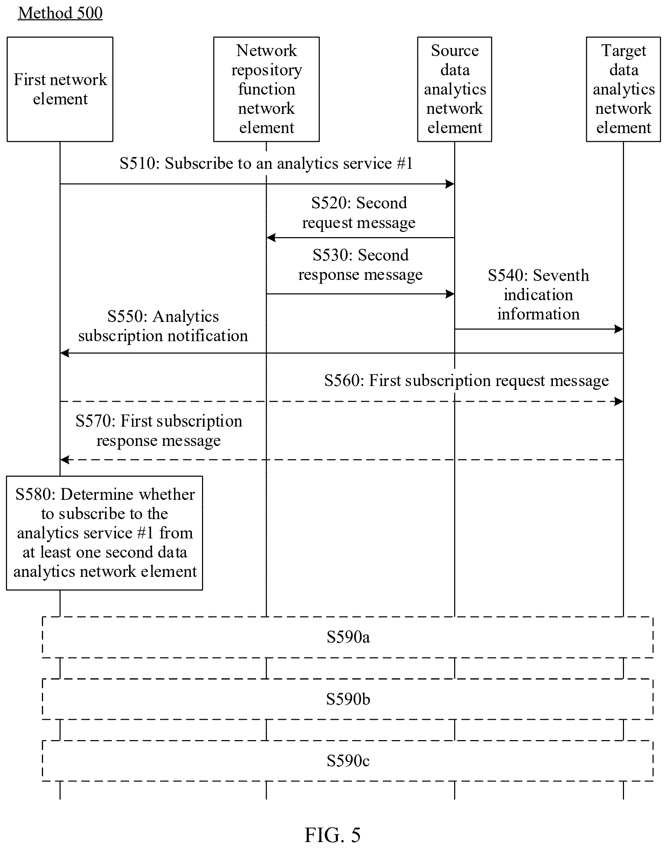

In this embodiment of this application, the source data analytics network element may discover the information about the at least one third data analytics network element from the network repository function network element, and send the first information to the first network element based on the information about the at least one third data analytics network element, so that the first network element can determine, based on the first information, whether the at least one first data analytics network element supports the first capability. When the first network element can determine whether the at least one first data analytics network element supports the first capability, adverse impact caused by subscribing to an analytics service by the first network element from a first data analytics network element that does not support the first capability can be avoided. Based on the method shown in FIG. 2, with reference to FIG. 5, the following describes the method provided in this embodiment of this application by using an example in which the second network element is the target data analytics network element.

FIG. 5 is a schematic flowchart of a communication method 500 according to an embodiment of this application. The following describes in detail steps included in the method 500.

S510: A first network element subscribes to an analytics service #1 from a source data analytics network element.

The analytics service #1 subscribed to by the first network element from the source data analytics network element includes a first service corresponding to a first capability. For more descriptions of the first capability and the first service, refer to S210 in the foregoing method 200.

S520: The source data analytics network element sends a second request message to a network repository function network element.

Correspondingly, the network repository function network element receives the second request message from the source data analytics network element.

For more descriptions of S520, refer to S420 in the foregoing method 400.

S530: The network repository function network element sends a second response message to the source data analytics network element.

Correspondingly, the source data analytics network element receives the second response message from the network repository function network element.

For more descriptions of S530, refer to S430 in the foregoing method 400.

S520 and S530 are optional steps.

S540: The source data analytics network element sends seventh indication information to the target data analytics network element.

Correspondingly, the target data analytics network element receives the seventh indication information from the source data analytics network element.

In S540, the source data analytics network element may send the seventh indication information to each first data analytics network element in the at least one first data analytics network element. The at least one first data analytics network element may also be referred to as a target data analytics network element.

The seventh indication information indicates that a first analytics context related to the analytics service #1 includes a context related to the first service, or the seventh indication information indicates that the first network element subscribes to the first service. The first analytics context further includes a context corresponding to a first analytics identifier, and the first analytics identifier corresponds to the analytics service #1. For descriptions of the context corresponding to the first analytics identifier and the context related to the first service, refer to that in S354 in the method 300.

It should be noted that, in S530, the source data analytics network element may obtain information about at least one third data analytics network element, and further, the source data analytics network element may send the seventh indication information to the at least one first data analytics network element based on the information about the at least one third data analytics network element. The at least one third data analytics network element includes the at least one first data analytics network element. For example, the at least one first data analytics network element includes a third data analytics network element that is in the at least one third data analytics network element and that supports providing the analytics service #1 for the first network element. For another example, the at least one first data analytics network element includes a third data analytics network element that is in the at least one third data analytics network element and whose load is lower than a load threshold.

After receiving the seventh indication information, the target data analytics network element can determine, based on the seventh indication information, that the first network element subscribes to the first service.

S550: The target data analytics network element sends an analytics subscription notification to the first network element.

Correspondingly, the first network element receives the analytics subscription notification from the target data analytics network element.

The analytics subscription notification includes first information, and the first information includes capability information of the target data analytics network element or third indication information. The capability information of the target data analytics network element or the third indication information is used to determine whether the target data analytics network element supports the first capability. For descriptions of the capability information of the target data analytics network element, refer to the descriptions of the capability information of the first data analytics network element #1 in S210 in the foregoing method 200. The third indication information indicates to terminate the first service corresponding to the first capability. It should be understood that, when the third indication information indicates to terminate the first service, it is equivalent to that the third indication information is used to determine that the target data analytics network element does not support the first capability.

It should be understood that, if the target data analytics network element does not support the first capability, the first information may include the third indication information or the capability information of the target data analytics network element. If the target data analytics network element supports the first capability, the first information may include the capability information of the target data analytics network element.

Optionally, if the first information includes the capability information of the target data analytics network element, but the capability information of the target data analytics network element does not include information about a level corresponding to the first capability supported by the target data analytics network element, the method 500 may further include S560 and S570.

S560: The first network element sends a second subscription request message to the target data analytics network element.

Correspondingly, the target data analytics network element receives the second subscription request message from the first network element.

For more descriptions of S560, refer to S330 in the foregoing method 300.

S570: The target data analytics network element sends a second subscription response message to the first network element.

Correspondingly, the first network element receives the second subscription response message from the target data analytics network element.

For more descriptions of S570, refer to S340 in the foregoing method 300.

S580: The first network element determines whether to subscribe to the analytics service #1 from at least one second data analytics network element.

For more descriptions of S580, refer to S350 in the foregoing method 300.

Optionally, if the first network element determines that the target data analytics network element does not support the first capability, or the target data analytics network element supports the first capability, but the level corresponding to the first capability supported by the target data analytics network element does not meet a requirement of the first network element on a level of the first capability, the method 400 further includes S590a or S590b. For more descriptions of S590a, refer to S480a in the foregoing method 400. For more descriptions of S590b, refer to S480b in the foregoing method 400.

Optionally, if the first network element determines to subscribe to the analytics service #1 from the target data analytics network element, the method 500 further includes S590c. For more descriptions of S590c, refer to S490 in the foregoing method 400.

In this embodiment of this application, the source data analytics network element may discover the target data analytics network element from the network repository function network element, and send the seventh indication information to the target data analytics network element, so that the target data analytics network element may send the first information to the first network element based on the seventh indication information. In this case, the first network element can determine, based on the first information, whether the target data analytics network element supports the first capability. When the first network element can determine whether the target data analytics network element supports the first capability, adverse impact caused by subscribing to the analytics service by the first network element from the target data analytics network element that does not support the first capability can be avoided.

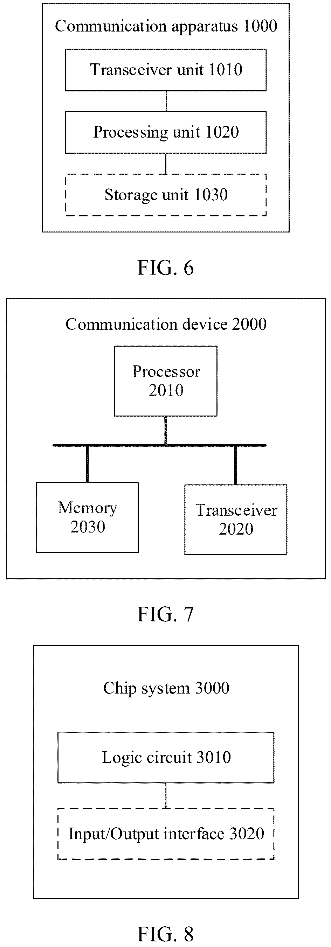

The foregoing describes the methods in embodiments of this application in detail with reference to FIG. 2 to FIG. 5. The following describes apparatuses in embodiments of this application in detail with reference to FIG. 6 to FIG. 8. It should be noted that the apparatuses shown in FIG. 6 to FIG. 8 may implement the steps in the foregoing methods. For brevity, details are not described herein again.

FIG. 6 is a block diagram of a communication apparatus 1000 according to an embodiment of this application. As shown in FIG. 6, the communication apparatus 1000 may include a transceiver unit 1010 and a processing unit 1020.

In a possible design, the communication apparatus 1000 may be the first network element in the foregoing method embodiments, or may be a chip configured to implement functions of the first network element in the foregoing method embodiments.

It should be understood that the communication apparatus 1000 may correspond to the first network element in the method 200, the method 300, the method 400, or the method 500 in embodiments of this application. The communication apparatus 1000 may include units configured to perform a method performed by the first network element in the method 200 in FIG. 2, the method 300 in FIG. 3, the method 400 in FIG. 4A and FIG. 4B, or the method 500 in FIG. 5. In addition, the units in the communication apparatus 1000 and the foregoing other operations and/or functions are respectively used to implement corresponding procedures of the method 200 in FIG. 2, the method 300 in FIG. 3, the method 400 in FIG. 4A and FIG. 4B, or the method 500 in FIG. 5. It should be understood that a specific process in which each unit performs the foregoing corresponding steps is described in detail in the foregoing method embodiments. For brevity, details are not described herein.

In another possible design, the communication apparatus 1000 may be the second network element in the foregoing method embodiments, or may be a chip configured to implement functions of the second network element in the foregoing method embodiments.

It should be understood that the communication apparatus 1000 may correspond to the method 200 in embodiments of this application. The communication apparatus 1000 may include units configured to perform the method performed by the second network element in the method 200 in FIG. 2. In addition, the units in the communication apparatus 1000 and the foregoing other operations and/or functions are separately used to implement corresponding procedures of the method 200 in FIG. 2. It should be understood that a specific process in which each unit performs the foregoing corresponding steps is described in detail in the foregoing method embodiments. For brevity, details are not described herein.

In another possible design, the communication apparatus 1000 may be the source data analytics network element in the foregoing method embodiments, or may be a chip configured to implement the function of the source data analytics network element in the foregoing method embodiments. It should be understood that the communication apparatus 1000 may correspond to the source data analytics network element in the method 300, the method 400, or the method 500 in embodiments of this application. The communication apparatus 1000 may include units configured to perform the method performed by the source data analytics network element in the method 300 in FIG. 3, the method 400 in FIG. 4A and FIG. 4B, or the method 500 in FIG. 5. In addition, the units in the communication apparatus 1000 and the foregoing other operations and/or functions are respectively used to implement corresponding procedures of the method 300 in FIG. 3, the method 400 in FIG. 4A and FIG. 4B, or the method 500 in FIG. 5. It should be understood that a specific process in which each unit performs the foregoing corresponding steps is described in detail in the foregoing method embodiments. For brevity, details are not described herein.

In another possible design, the communication apparatus 1000 may be the network repository function network element in the foregoing method embodiments, or may be a chip configured to implement functions of the network repository function network element in the foregoing method embodiments.

It should be understood that the communication apparatus 1000 may correspond to the network repository function network element in the method 300, the method 400, or the method 500 in embodiments of this application. The communication apparatus 1000 may include units configured to perform the method performed by the network repository function network element in the method 300 in FIG. 3, the method 400 in FIG. 4A and FIG. 4B, or the method 500 in FIG. 5. In addition, the units in the communication apparatus 1000 and the foregoing other operations and/or functions are respectively used to implement corresponding procedures of the method 300 in FIG. 3, the method 400 in FIG. 4A and FIG. 4B, or the method 500 in FIG. 5. It should be understood that a specific process in which each unit performs the foregoing corresponding steps is described in detail in the foregoing method embodiments. For brevity, details are not described herein.

In another possible design, the communication apparatus 1000 may be the target data analytics network element in the foregoing method embodiments, or may be a chip configured to implement the function of the target data analytics network element in the foregoing method embodiments. It should be understood that the communication apparatus 1000 may correspond to the target data analytics network element in the method 600 in embodiments of this application. The communication apparatus 1000 may include units configured to perform the method performed by the target data analytics network element in the method 500 in FIG. 5. In addition, the units in the communication apparatus 1000 and the foregoing other operations and/or functions are separately used to implement corresponding procedures of the method 500 in FIG. 5. It should be understood that a specific process in which each unit performs the foregoing corresponding steps is described in detail in the foregoing method embodiments. For brevity, details are not described herein.

It should be further understood that the transceiver unit 1010 in the communication apparatus 1000 may correspond to a transceiver 2020 in a communication device 2000 shown in FIG. 7, and the processing unit 1020 in the communication apparatus 1000 may correspond to a processor 2010 in the communication device 2000 shown in FIG. 7.

It should be further understood that when the communication apparatus 1000 is a chip, the chip includes a transceiver unit. Optionally, the chip may further include a processing unit. The transceiver unit may be an input/output circuit or a communication interface. The processing unit may be a processor, a microprocessor, or an integrated circuit integrated on the chip.

The transceiver unit 1010 is configured to implement signal receiving and sending operations of the communication apparatus 1000, and the processing unit 1020 is configured to implement a signal processing operation of the communication apparatus 1000.

Optionally, the communication apparatus further includes a storage unit 1030, and the storage unit 1030 is configured to store instructions.

FIG. 7 is a block diagram of the communication device 2000 according to an embodiment of this application. As shown in FIG. 7, the communication device 2000 includes at least one processor 2010 and the transceiver 2020. The processor 2010 is coupled to a memory, and is configured to execute instructions stored in the memory, to control the transceiver 2020 to send a signal and/or receive a signal. Optionally, the communication device 2000 further includes the memory 2030, configured to store the instructions.

It should be understood that the processor 2010 and the memory 2030 may be integrated into one processing apparatus. The processor 2010 is configured to execute program code stored in the memory 2030, to implement the foregoing functions. During specific implementation, the memory 2030 may alternatively be integrated into the processor 2010, or may be independent of the processor 2010.

It should be further understood that the transceiver 2020 may include a receiver (also referred to as a receiver device) and a transmitter (also referred to as a transmitter device). The transceiver 2020 may further include an antenna. There may be one or more antennas. The transceiver 2020 may alternatively be an antenna interface or an interface circuit.

When the communication device 2000 is a chip, the chip includes a transceiver unit and a processing unit. The transceiver unit may be an input/output circuit or a communication interface. The processing unit may be a processor, a microprocessor, or an integrated circuit integrated on the chip.

FIG. 8 is a diagram of a chip system according to an embodiment of this application. The chip system herein may also be a system including a circuit. A chip system 3000 shown in FIG. 8 includes a logic circuit 3010 and an input/output interface (input/output interface) 3020. The logic circuit is configured to: be coupled to the input interface, and transmit data through the input/output interface, to perform the method in FIG. 2, FIG. 3, FIG. 4A and FIG. 4B, or FIG. 5.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application-specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps in the methods disclosed with reference to embodiments of this application may be performed and completed by a hardware processor, or may be performed and completed by a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like.

It may be understood that the memory in embodiments of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the method provided in embodiments of this application, this application further provides a computer program product. The computer program product includes computer program code. When the computer program code is run on a computer, the computer is caused to perform the method in any one of embodiments shown in FIG. 2, FIG. 3, FIG. 4A and FIG. 4B, or FIG. 5. According to the method provided in embodiments of this application, this application further provides a computer-readable storage medium. The computer-readable storage medium stores program code. When the program code is run on a computer, the computer is caused to perform the method in any one of embodiments shown in FIG. 2, FIG. 3, FIG. 4A and FIG. 4B, or FIG. 5. According to the method provided in embodiments of this application, this application further provides a system, including the foregoing first network element and second network element. Optionally, the system further includes at least one data analytics network element.

All or some of the foregoing embodiments may be implemented by software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of the procedures or functions according to embodiments of this application are generated. The computer instructions may be stored in a computer-readable storage medium, or transmitted from one computer-readable storage medium to another computer-readable storage medium. A computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

In several embodiments mentioned in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network element, first information from a second network element, wherein the first information is used to determine whether at least one first data analytics network element supports a first capability, and the first capability comprises one or more of the following: an accuracy checking capability, an analytics aggregation capability, or an analytics metadata provisioning capability; and
determining, by the first network element based on the first information, whether to subscribe to an analytics service from at least one second data analytics network element.

2. The method according to claim 1, wherein the second network element is a network repository function network element, capability information of the at least one first data analytics network element or first indication information comprised in the first information is used to determine whether the at least one first data analytics network element supports the first capability, and the first indication information indicates to terminate a first service corresponding to the first capability; and before the receiving, by the first network element, the first information from the second network element, the method further comprises:
sending, by the first network element, a first request message to the second network element, wherein the first request message is used to request information about at least one data analytics network element.

3. The method according to claim 2, wherein the first request message comprises a first analytics identifier or a variant analytics identifier of the first analytics identifier, the variant analytics identifier corresponds to the first capability, and the capability information of the at least one first data analytics network element is used to determine whether the at least one first data analytics network element supports the first capability for the first analytics identifier.

4. The method according to claim 1, wherein the second network element is a source data analytics network element, the source data analytics network element is configured to provide the analytics service for the first network element, the analytics service comprises a first service corresponding to the first capability, capability information of the at least one first data analytics network element or second indication information comprised in the first information is used to determine whether the at least one first data analytics network element supports the first capability, and the second indication information indicates to terminate the first service.

5. The method according to claim 1, wherein the second network element is a target data analytics network element, the at least one first data analytics network element comprises the target data analytics network element, capability information of the target data analytics network element or third indication information comprised in the first information is used to determine whether the target data analytics network element supports the first capability, and the third indication information indicates to terminate a first service corresponding to the first capability.

6. The method according to any one of claims 1 to 5, wherein the first information is further used to determine a level corresponding to the first capability supported by the at least one data analytics network element.

7. The method according to any one of claims 1 to 6, wherein the determining, by the first network element based on the first information, whether to subscribe to the analytics service from the at least one second data analytics network element comprises:
determining, by the first network element based on the first information, not to subscribe to the analytics service from the at least one second data analytics network element, wherein the first information is used to determine that the at least one first data analytics network element does not support the first capability.

8. The method according to claim 7, wherein the method further comprises:
sending, by the first network element, a first request to the source data analytics network element or the target data analytics network element, wherein the first request comprises fourth indication information, the fourth indication information indicates to pause subscription to or unsubscribe the analytics service, the source data analytics network element is configured to provide the analytics service for the first network element, the analytics service comprises the first service corresponding to the first capability, and the at least one first data analytics network element comprises the target data analytics network element.

9. The method according to claim 8, wherein the first request further comprises fifth indication information, and the fifth indication information indicates that the at least one first data analytics network element does not support the first capability, or the fifth indication information indicates that the at least one first data analytics network element is incapable of providing the first service corresponding to the first capability.

10. The method according to any one of claims 1 to 6, wherein the determining, by the first network element based on the first information, whether to subscribe to the analytics service from the at least one second data analytics network element comprises:
subscribing to, by the first network element, the analytics service from the at least one second data analytics network element based on the first information, wherein the second data analytics network element is a first data analytics network element that supports the first capability in the at least one first data analytics network element.

11. The method according to claim 10, wherein the method further comprises:
receiving, by the first network element, an analytics result and service information from the at least one second data analytics network element, wherein the service information corresponds to the first service; and
performing, by the first network element, a first decision based on the analytics result, wherein when the service information is used to determine that the analytics result does not meet a requirement of the first network element on the level corresponding to the first capability, a proportion of the analytics result in a factor for executing the first decision by the first network element does not exceed a threshold.

12. The method according to claim 11, wherein the method further comprises:
sending, by the first network element, sixth indication information to the at least one second data analytics network element, wherein the sixth indication information indicates to unsubscribe or pause subscription to the first service corresponding to the first capability.

13. The method according to any one of claims 1 to 6, wherein the determining, by the first network element based on the first information, whether to subscribe to the analytics service from the at least one second data analytics network element comprises:
determining, by the first network element based on the first information, to subscribe to the analytics service from the at least one second data analytics network element, wherein the second data analytics network element is different from the first data analytics network element, and the first information is used to determine that the at least one first data analytics network element does not support the first capability.

14. The method according to any one of claims 1 to 13, wherein the first capability corresponds to the first service, wherein the first capability comprises the accuracy checking capability, and the first service comprises providing analytics accuracy information; or the first capability comprises the analytics aggregation capability, and the first service comprises providing aggregation analytics; or the first capability comprises the analytics metadata provisioning capability, and the first service comprises providing analytics metadata information.

15. A communication method, comprising:
obtaining, by a source data analytics network element, information about at least one third data analytics network element, wherein the source data analytics network element is configured to provide an analytics service for a first network element, the analytics service comprises a first service corresponding to a first capability, and the first capability comprises one or more of the following: an accuracy checking capability, an analytics aggregation capability, or an analytics metadata provisioning capability; and
sending, by the source data analytics network element, first information to the first network element based on the information about the at least one third data analytics network element, wherein capability information of at least one first data analytics network element or second indication information comprised in the first information is used to determine whether the at least one first data analytics network element supports the first capability, the second indication information indicates to terminate the first service, and the at least one third data analytics network element comprises the at least one first data analytics network element.

16. The method according to claim 15, wherein if the information about the at least one third data analytics network element comprises capability information of the at least one third data analytics network element, the first information comprises the capability information of the at least one first data analytics network element; or
if the information about the at least one third data analytics network element comprises the capability information of the at least one third data analytics network element, and the capability information of the at least one third data analytics network element is used to determine that the at least one third data analytics network element does not support the first capability, the first information comprises the second indication information; or
if the information about the at least one third data analytics network element does not comprise the capability information of the at least one third data analytics network element, the first information comprises the second indication information.

17. The method according to claim 15 or 16, wherein the method further comprises:
sending, by the source data analytics network element, seventh indication information to the at least one first data analytics network element, wherein the seventh indication information indicates that a first analytics context related to the analytics service comprises a context related to the first service, or the seventh indication information indicates that the first network element subscribes to the first service.

18. The method according to any one of claims 15 to 17, wherein the method further comprises:
receiving, by the source data analytics network element, a first request from the first network element, wherein the first request comprises fourth indication information, and the fourth indication information indicates to unsubscribe or pause subscription to the analytics service.

19. The method according to claim 18, wherein the first request further comprises fifth indication information, and the fifth indication information indicates that the at least one first data analytics network element does not support the first capability, or the fifth indication information indicates that the at least one first data analytics network element is incapable of providing the first service.

20. The method according to claim 18 or 19, wherein the method further comprises:
sending, by the source data analytics network element, a second analytics context related to the analytics service to the at least one first data analytics network element, wherein the second analytics context does not comprise the context related to the first service; or
sending, by the source data analytics network element, a third request message to the network repository function network element, wherein the third request message is used to request information about at least one data analytics network element.

21. The method according to any one of claims 15 to 17, wherein the method further comprises:
receiving, by the source data analytics network element, eighth indication information from a target data analytics network element, wherein the eighth indication information indicates to unsubscribe or pause subscription to the first service corresponding to the first capability, and the at least one first data analytics network element comprises the target data analytics network element; and
sending, by the source data analytics network element, a second analytics context of the analytics service to the target data analytics network element.

22. The method according to any one of claims 15 to 21, wherein the first capability comprises the accuracy checking capability, and the first service comprises providing analytics accuracy information; or the first capability comprises the analytics aggregation capability, and the first service comprises providing aggregation analytics; or the first capability comprises the analytics metadata provisioning capability, and the first service comprises providing analytics metadata information.

23. A communication method, comprising:
receiving, by a target data analytics network element, seventh indication information from a source data analytics network element, wherein the seventh indication information indicates that a first analytics context related to an analytics service comprises a context related to a first service, or the seventh indication information indicates that a first network element subscribes to the first service, the source data analytics network element is configured to provide an analytics service for the first network element, the analytics service comprises the first service corresponding to a first capability, and the first capability comprises one or more of the following: an accuracy checking capability, an analytics aggregation capability, or an analytics metadata provisioning capability; and
sending, by the target data analytics network element, first information to the first network element based on the seventh indication information, wherein capability information of the target data analytics network element or third indication information comprised in the first information is used to determine whether the target data analytics network element supports the first capability, and the third indication information indicates to terminate the first service.

24. The method according to claim 23, wherein the method further comprises:
receiving, by the target data analytics network element, a first request from the first network element, wherein the first request comprises fourth indication information, and the fourth indication information indicates to unsubscribe or pause subscription to the analytics service.

25. The method according to claim 24, wherein the method further comprises:
obtaining, by the target data analytics network element, information about at least one fourth data analytics network element; and
sending, by the target data analytics network element, second information to the first network element based on the information about the at least one fourth data analytics network element, wherein capability information of at least one fifth data analytics network element or ninth indication information comprised in the second information is used to determine whether the at least one fifth data analytics network element supports the first capability, the ninth indication information indicates to terminate the first service, and the at least one fourth data analytics network element comprises the at least one fifth data analytics network element.

26. The method according to claim 23, wherein the method further comprises:
receiving, by the target data analytics network element, sixth indication information from the first network element, wherein the sixth indication information indicates to unsubscribe or pause subscription to the first service;
sending, by the target data analytics network element, eighth indication information to the source data analytics network element, wherein the eighth indication information indicates to unsubscribe or pause subscription to the first service; and
receiving, by the target data analytics network element, a second analytics context related to the analytics service from the source data analytics network element, wherein the second analytics context does not comprise the context related to the first service.

27. The method according to any one of claims 23 to 26, wherein the first capability comprises the accuracy checking capability, and the first service comprises providing analytics accuracy information; or the first capability comprises the analytics aggregation capability, and the first service comprises providing aggregation analytics; or the first capability comprises the analytics metadata provisioning capability, and the first service comprises providing analytics metadata information.

28. A communication apparatus, comprising a module or a unit configured to implement the method according to any one of claims 1 to 14, or comprising a module or a unit configured to implement the method according to any one of claims 15 to 22, or comprising a module or a unit configured to implement the method according to any one of claims 23 to 27.

29. A communication apparatus, comprising at least one processor, wherein the at least one processor is coupled to at least one memory, and the at least one processor is configured to execute a computer program or instructions stored in the at least one memory, to cause the communication apparatus to perform the method according to any one of claims 1 to 14, or cause the communication apparatus to perform the method according to any one of claims 15 to 22, or cause the communication apparatus to perform the method according to any one of claims 23 to 27.

30. A chip, comprising a processor and a communication interface, wherein the communication interface is configured to: receive data and/or information, and transmit the received data and/or the information to the processor, and the processor processes the data and/or the information, to perform the method according to any one of claims 1 to 14, or to perform the method according to any one of claims 15 to 22, or to perform the method according to any one of claims 23 to 27.

31. A computer-readable storage medium, wherein the computer-readable storage medium stores a computer program, and when the computer program is executed, a computer is caused to perform the method according to any one of claims 1 to 14, or a computer is caused to perform the method according to any one of claims 15 to 22, or a computer is caused to perform the method according to any one of claims 23 to 27.

32. A computer program product comprising instructions, wherein when the computer program product runs on a computer, the computer is caused to perform the method according to any one of claims 1 to 14, or the computer is caused to perform the method according to any one of claims 15 to 22, or the computer is caused to perform the method according to any one of claims 23 to 27.

33. A communication system, comprising a first network element and a second network element, wherein the first network element is configured to perform the method according to any one of claims 1 to 14, the second network element is configured to perform the method according to any one of claims 15 to 22, or the second network element is configured to perform the method according to any one of claims 23 to 27.
